(19) Europäisches Patentamt
European Patent Office
Office européen des brevets

(11) Publication number: 0 020 161 A2

(12) # EUROPEAN PATENT APPLICATION

(21) Application number: 80301804.3

(22) Date of filing: 30.05.80

(51) Int. Cl.³: C 09 B 29/033, C 09 B 29/09, C 09 B 29/36

(30) Priority: 01.06.79 US 44446

(43) Date of publication of application: 10.12.80 Bulletin 80/25

(84) Designated Contracting States: CH DE GB LI

(71) Applicant: EASTMAN KODAK COMPANY, 343 State Street, Rochester, New York 14650 (US)

(72) Inventor: Weaver, Max Allen, P.O. Box 511, Kingsport, Tennessee (US)
Inventor: Coates, Clarence Alvin, Jr., P.O. Box 511, Kingsport, Tennessee (US)
Inventor: Fleischer, Jean Carroll, P.O. Box 511, Kingsport, Tennessee (US)

(74) Representative: Trangmar, Leigh Alan et al, KODAK LIMITED P.O. Box 114 246 High Holborn, London WC1V 7EA (GB)

(54) **Azodyestuffs derived from 5-membered heterocyclic amines and aromatic couplers containing sulpho-groups, or salts thereof and their use in dyeing polyamide fibres.**

(57) Mono azo dyes are derived from certain diazotized 5-membered heterocyclic amines and certain aniline, 1,2,3,4-tetrahydroquinoline and benzomorpholine couplers containing sulphoalkyl groups. The amine and coupler nuclei may be substituted. These dyes impart fast violet to blue shades to polyamide fibres.

EP 0 020 161 A2

TITLE MODIFIED
see front page



0020161

AZO DYES DERIVED FROM 5-MEMBERED HETEROCYCLIC AMINES AND AROMATIC AMINE COUPLERS CONTAINING SULPHO GROUPS, OR SALTS THEREOF

This invention concerns mono azo dyes derived from diazotized 5-membered heterocyclic amines and certain aniline, 1,2,3,4-tetrahydroquinoline and benzomorpholine couplers containing sulphoalkyl groups. These dyes are useful for dyeing synthetic fibres, cellulose acetate and wool, and impart fast violet to blue shades to polyamide fibres. The dyes exhibit generally good properties such as fastness to light, sublimation, ozone, oxides of nitrogen, perspiration, crock and wash, and exhibit excellent build, pH stability, bloom resistance, depth of shade, levelling and migration.

In accordance with the present invention, there is provided a dye characterised in that it has the formula D-N=N-Coupler, wherein D is selected from the heterocyclic groups of the formulae

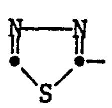 , 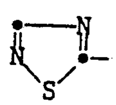 , 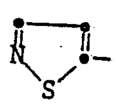 , 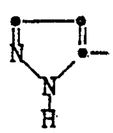 and 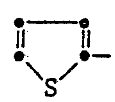

I . II . III . IV . V

wherein ring I may bear a substituent selected from alkyl, substituted alkyl, alkoxy, halogen, alkylsulphonyl, $-SO_2O$-aryl, $-SO_2NH_2$, $-SO_2NH$-alkyl, $-SO_2N$-(dialkyl), arylsulphonyl, $-SO_2NH$-substituted alkyl, $-SO_2NH$-aryl,

acylamido, aryl, arylthio, alkenylthio, cyclohexylthio, thiocyano, cyclohexylsulphonyl, alkylthio, substituted alkylthio and cyclohexyl;

ring II may bear a substituent selected from alkyl, substituted alkyl, aryl, alkylthio, cyclohexylthio, substituted alkylthio and alkylsulphonyl;

ring III may bear one or two substituents selected from alkyl, substituted alkyl, halogen, cyano, carbamoyl, -CONH-alkyl, -CONH-substituted alkyl, alkoxycarbonyl, alkylthio, substituted alkylthio, alkenylthio, arylthio, cyclohexylthio, alkylsulphonyl, S-heterocycle, aryloxy, -SCN, and alkoxy;

ring IV may bear one or more substituents selected from alkyl, substituted alkyl, alkoxycarbonyl, alkylthio, aryl, $-SO_2$-aryl, $-SO_2$-cycloalkyl, cyano, carbamoyl, alkyl carbamoyl, alkylcarbonyl, substituted alkyl carbamoyl, and alkylsulphonyl; and

ring V may be substituted with one to three substituents selected from alkyl, substituted alkyl, cyano, alkoxycarbonyl, acyl, aroyl, alkylsulphonyl, arylsulphonyl, carbamoyl, alkyl carbamoyl, substituted alkyl carbamoyl, aryl, halogen, sulphamoyl, -SCN, alkylthio, alkylsulphamoyl, substituted alkyl sulphamoyl and formyl;

and wherein the various alkyl groups, including those present in alkoxy groups, may bear one to three substituents selected from hydroxy, alkoxy, aryl, aryloxy, cyclohexyl, alkylcyclohexyl, acyloxy, alkoxy

carbonyl, acylamido, alkylsulphonamido, succinimido, glutarimido, phthalimido, 2-pyrrolidono, cyano, carbamoyl, -CONH(alkyl), alkoxyalkoxy, alkylthio, halogen, arylthio, alkylsulphonyl and arylsulphonyl;

and wherein the various aryl groups may be substituted with one to three substituents selected from alkyl, alkoxy, cyano, halogen, alkoxy carbonyl, alkylsulphonyl, $-CONH_2$, and alkylthio; and

the Coupler is derived from those of the formulae

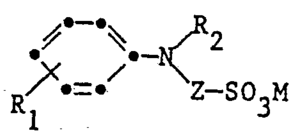 , 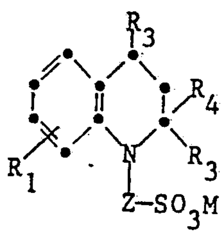 and 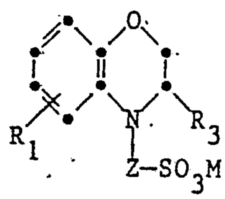

wherein

$R_1$ is hydrogen or one or two substituents selected from alkyl, halogen, alkylthio, alkoxy, aryloxy, and $-NHCO-R_5$ or $-NHSO_2-R_5$ wherein $R_5$ is selected from alkyl which may be substituted with hydroxy, alkoxy, cyano, aryloxy, aryl, halogen, cycloalkyl, alkyl carbonyloxy, or carbamoyl; hydrogen; aryl; alkoxy, cycloalkyl; alkylamino; 2-furyl; $R_2$ is selected from hydrogen, aryl, cycloalkyl, and alkyl which may be substituted with alkoxy, alkoxyalkoxy, hydroxy, aryloxy, aryl, cycloalkyl, alkylcycloalkyl, furyl, acylamido, $NHCOR_5$, $NHSO_2R_5$, aryloxy, carbamoyl, alkoxy carbamoyl, alkyl substituted carbamoyl, cyano, alkanoyloxy, halogen, alkoxycarbonyl, succinimido, glutarimido, phthalimido,

2-pyrrolidono, sulphamoyl, alkyl substituted sulphamoyl, alkylsulphonamido, $-NHSO_2$-aryl, -NHCOO-alkyl, -NHCONH-alkyl, alkylsulphonyl, arylsulphonyl, alkylthio, arylthio or $-SO_3M$; M is $Na^+$, $K^+$, $NH_4{}^+$, or $H^+$; $R_3$ and $R_4$ are each selected from hydrogen or alkyl; Z is selected from alkylene, alkylene substituted with aryl, aryloxy, alkoxy, -OCO(alkyl), halogen, hydroxy or $-SO_3M$, and $-CH_2(CH_2)_m-X-CH_2(CH_2)_p-$, where m is 1, 2, or 3, p is 0, 1, 2 or 3, and X is -O-, -S-, $-SO_2-$, -COO-, $-NHSO_2-$,

alkyl

$-SO_2NH-$, $-SO_2\overset{|}{N}$-alkyl, $-\overset{|}{N}-SO_2$-alkyl, $-SO_2-\overset{|}{N}-$,

alkyl

$-\overset{|}{N}-SO_2-$, $-\overset{|}{N}-SO_2$-aryl, $-\overset{|}{N}-SO_2$-cyclohexyl, $-SO_2-\overset{|}{N}$-cyclohexyl,

aryl

-N-CO-aryl, $-CO-\overset{|}{N}$-aryl, $-\overset{|}{N}-CO-$, $-\overset{|}{N}CO$-alkyl, -NHCO-, -CONH-,

alkyl alkyl aryl O

-NHCOO-, $-\overset{|}{N}-CO-$, $-CO-\overset{|}{N}-$, $-\overset{|}{N}-SO_2-$, or $-NH\overset{\|}{C}NH-$; the various aryl groups in the Coupler may be substituted with alkyl, alkoxy or halogen; the alkyl or alkylene moieties of all the above groups being straight or branched chains of 1 to 6 carbon atoms, and the aryl moieties having 6 to 12 carbon atoms.

The following couplers are particularly valuable in the practice of this invention.

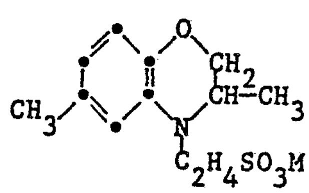

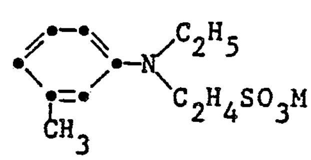

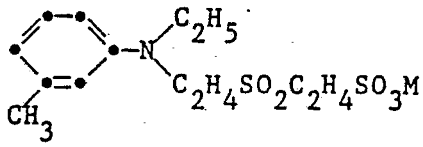

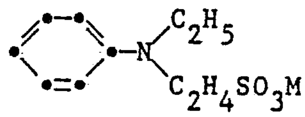

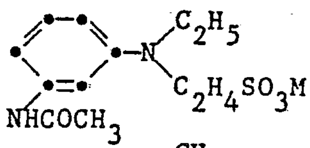

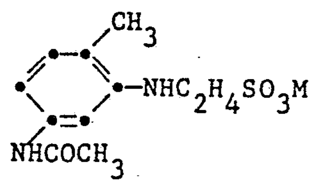

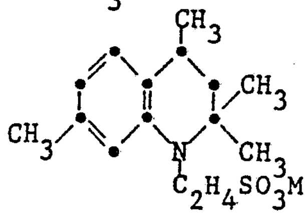

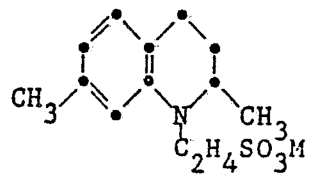

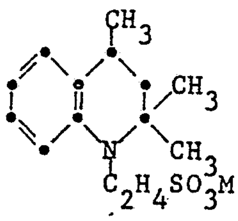

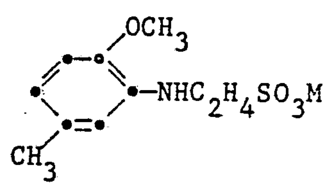

The intermediate couplers containing a sulphoethyl group may be prepared in the best purity by reacting the appropriate anilines, tetrahydroquinolines and benzomorpholines with vinylsulphonyl fluoride, followed by basic hydrolysis. A typical reaction is:

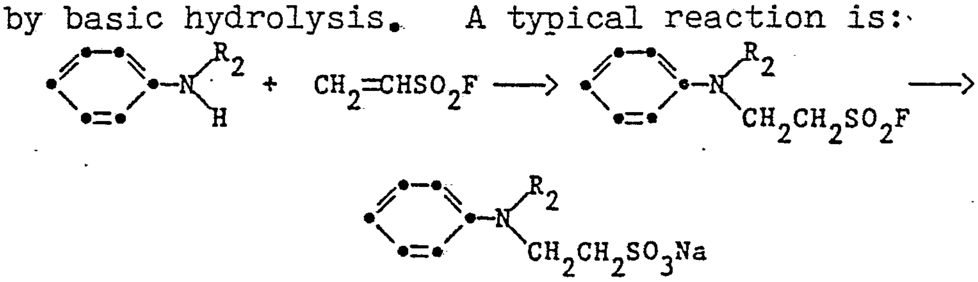

Other general methods useful for preparing these couplers containing sulpho groups are given by R.B.Wagner and H.D.Zook, "Synthetic Organic Chemistry", John Wiley & Sons, Inc., New York, 1953, pp. 812-819.

Three suitable methods are: (I) oxidation of mercaptans; (II) alkylation of alkali sulphite; and (III) addition of bisulphites to unsaturated compounds, as follows:

$R\text{-}SH \xrightarrow{[O]} R\text{-}SO_3H$ (I);

$R\text{-}Cl + Na_2SO_3 \longrightarrow R\text{-}SO_3Na$ (II);

$R\text{-}CH{=}CH_2 + NaHSO_3 \longrightarrow R\text{-}CH_2CH_2SO_3Na$ (III).

The following coupler intermediates, in each of which the aniline benzene ring may be substituted as previously described, are typical of those appropriate for reacting with sodium sulphite according to method II.

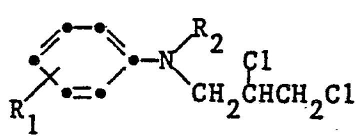 , 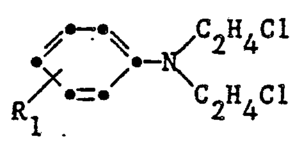 , 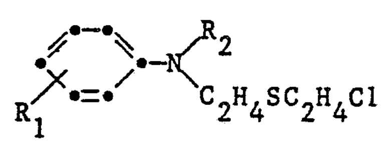 ,

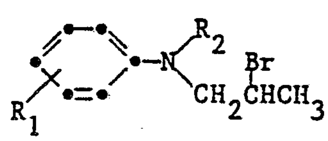 , 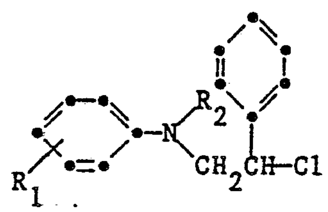 , 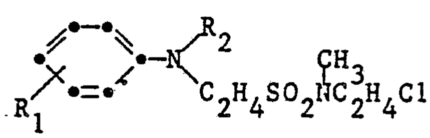 ,

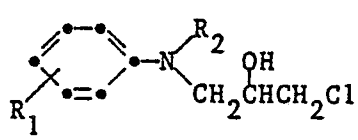 , 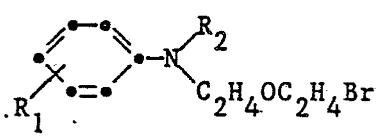 and

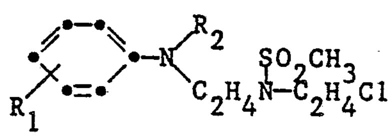

The halogen-containing couplers may be prepared by reacting the corresponding known hydroxy compounds with $POCl_3$, $SOCl_2$, $POBr_3$, $PBr_3$, and similar compounds by methods well known in the art. The tetrahydroquinolines and benzomorpholines are similarly prepared.

The following coupler intermediates are typical of those containing vinyl groups capable of being reacted with sodium bisulphite by method III, as disclosed, for example, in United States Patent Specifications Nos. 3,369,013, 3,415,810 and 3,472,833.

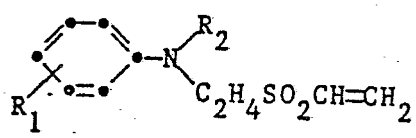 , 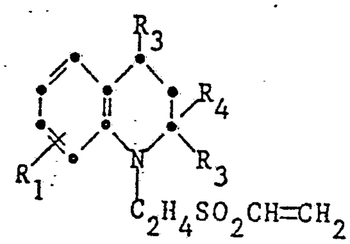 ,

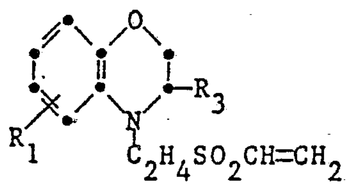 , 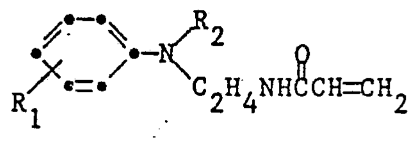 ,

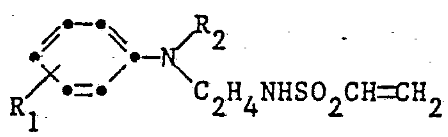 and 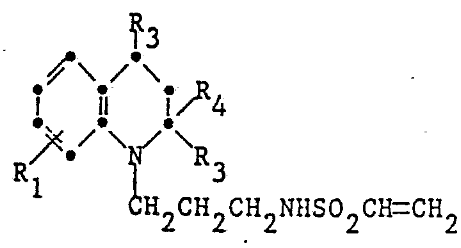

Intermediates containing the acrylamide and vinylsulphonamido groups can be prepared by reacting the corresponding amino compound with acryloyl chloride and vinylsulphonyl fluoride respectively by methods well known in the art.

Preparation of N-(2-Fluorosulphonylethyl)-N-ethyl-m-toluidine

N-Ethyl-m-toluidine (66.5 g, 0.5 m) was dissolved in isopropyl alcohol (75 ml) and vinylsulphonyl fluoride (55 g, 0.5 m) was added dropwise over one and

a quarter hours. The temperature of the reaction mixture rose to 38°C. The reaction mixture was stirred for one hour at ambient temperature, and then poured into 500 ml of ice and water. The product was collected by filtration, washed with water, and dried in air. The product melted at 32-34°C.

Preparation of N-(2-Potassiosulphoethyl)-N-ethyl-m-toluidine

N-(2-Fluorosulphonylethyl)-N-ethyl-m-toluidine (24.5 g, 0.1 m) was stirred in water (200 ml) and potassium hydroxide (10 g) for one to three hours at room temperature or until thin layer chromatography showed the reaction to be complete. The product was not isolated but was used as an aqueous solution in the coupling reaction.

Preparation of N-(2-Fluorosulphonylethyl)-N-ethylaniline

N-Ethylaniline (48.4 g, 0.4 m), triethylamine (40.4 g, 0.4 m) and benzene (100 ml) were stirred together at room temperature and 2-chloroethanesulphonyl fluoride (58.6 g, 0.4 m) was added dropwise. The reaction mixture was heated at reflux for one and a half hours after the addition was complete. The reaction mixture was cooled and filtered to remove any insoluble salts, and the benzene was removed by distillation. The crude product was poured into hexane (150 ml) and purified by filtration and washing with hexane. The product melted at 48-50°C.

Preparation of N-(2-Potassiosulphoethyl)-N-ethylaniline

N-(2-Fluorosulphonylethyl)-N-ethylaniline (22.8 g, 0.1 m) was stirred in water (200 ml) and potassium hydroxide (10 g) for one to three hours, or until thin layer chromatography showed the reaction to be complete. The product was not isolated but was used as an aqueous solution in the coupling reaction.

Preparation of N-(2-Fluorosulphonylethyl)-2-methyl-5-acetamidoaniline

2-Methyl-5-acetamido aniline (49.2 g, 0.3 m), triethylamine (32.7 g, 0.3m) and p-dioxane (350 ml) were stirred together at room temperature. 2-Chloroethane sulphonylfluoride (43.0 g, 0.3 m) was added dropwise, and the temperature was allowed to rise to 45°C. The reaction mixture was then heated at reflux for three hours. When thin layer chromatography showed the reaction to be complete, the reaction mixture was allowed to cool and then poured into water (2000 ml). The product was collected by filtration and washed with water. It melted at 154-155°C.

Preparation of N-(2-Potassiosulphoethyl)-2-methyl-5-acetamido aniline

N-(2-Fluorosulphonylethyl)-2-methyl-5-acetamidoaniline (13.7 g, 0.05 m) was stirred with water (100 ml) and potassium hydroxide (5.0 g) at room temperature for two hours, when thin layer chromatography showed the reaction to be complete. The aqueous solution was used in the coupling reaction without further treatment.

Preparation of N-(2-Fluorosulphonylethyl)-2-methoxy-5-methylaniline

2-Methoxy-5-methylaniline (34.3 g, 0.25 m) was dissolved in N,N-dimethylformamide (50 ml). Vinylsulphonyl fluoride (28.0 g, 0.26 m) was added dropwise at 20-30°C. After the addition was complete, the reaction mixture was stirred at ambient temperature for one hour. The reaction mixture was poured into water (400 ml), the product collected by filtration, washed with water and dried in air. The product melted at 56-58°C. The corresponding N-(2-potassiosulphoethyl)-2-methoxy-5-methylaniline was prepared therefrom by the above technique using potassium hydroxide.

Preparation of N-(2-Fluorosulphonylethyl)-2,2,4,7-tetramethyl-1,2,3,4-tetrahydroquinoline

2,2,4,7-Tetramethyl-1,2,3,4-tetrahydroquinoline (94.5 g, 0.5 m) was dissolved in acetic acid (200 ml). The reaction mixture was heated to 50°C. and vinylsulphonylfluoride (44.0 g, 0.5 m) was added over 30 minutes at 48-50°C. The reaction mixture was then stirred and heated for two and a half hours at 50-55°C. Thin layer chromatography showed the reaction to be complete. The reaction mixture was poured into water (1200 ml), the product was collected by filtration, washed with water and dried in air. The product melted at 67-69°C.

N-(2-fluorosulphonylethyl)-2,2,4-trimethyl-1,2,3,4-tetrahydroquinoline and N-(2-fluorosulphonylethyl)-2,7-dimethyl-1,2,3,4-tetrahydroquinoline were prepared in the same manner.

Preparation of N-(2-Sodiosulphoethyl)-2,2,4,7-tetramethyl-1,2,3,4-tetrahydroquinoline

N-(2-fluorosulphonylethyl)-2,2,4,7-tetramethyl-1,2,3,4-tetrahydroquinoline (12.0 g, 0.04 m) was stirred with water (100 ml) and sodium hydroxide (5.0 g), warmed to 50°C for 30 minutes, allowed to come to room temperature and stirred for one and a half hours. Thin layer chromatography showed the reaction to be complete. The product was not isolated but was used in the coupling reaction as an aqueous solution.

The same process was used to prepare N-(2-potassiosulphoethyl)-2,2,4-trimethyl-1,2,3,4-tetrahydroquinoline and N-(2-potassiosulphoethyl)-2,7-dimethyl-1,2,3,4-tetrahydroquinoline, using potassium hydroxide as the base.

Preparation of N-(2-Fluorosulphonylethyl)3,6-dimethyl-2,3-dihydro-1,4-benzoxazine

3,6-Dimethyl-2,3-dihydro-1,4-benzoxazine (16.3 g, 0.1 m) was dissolved in acetic acid (40 ml) at ambient temperature and vinylsulphonylfluoride (11 g, 0.1 m) was added dropwise at 25-35°C. After stirring for one and a half hours, the reaction was

complete. The reaction mixture was poured into water (400 ml). The dark oil which separated was extracted with hexane (1200 ml), and the hexane solution was dried over sodium sulphate. The sodium sulphate was removed and the hexane distilled off to yield 23.3 g. of oily product. The corresponding N-2(potassiosulphoethyl)-3,6-dimethyl-2,3-dihydro-1,4-benzoxazine was prepared as above, using potassium hydroxide.

Preparation of N-(2-Fluorosulphonylethyl)-N-ethyl-m-acetamidoaniline

N-ethyl-m-acetamidoaniline (178.0 g, 1.0 m) was dissolved in isopropyl alcohol (450 ml) and vinylsulphonylfluoride (110 g, 1.0 m) was added dropwise, the temperature being allowed to rise to 40°C. The reaction mixture was stirred for two and a half hours, the product was collected by filtration, washed with cold ethanol and dried in air.

Preparation of N-(2-Sodiosulphoethyl)-sulphonylethyl-N-ethyl-m-toluidine

N-(2-vinylsulphonylethyl)-N-ethyl-m-toluidine (25.3 g, 0.1 m) in water (100 ml) was stirred with sodium bisulphite (11.0 g, 0.1 m). The reaction mixture was heated to reflux and kept at that temperature for 15 minutes. The clear solution was poured into ethanol (200 ml) and allowed to cool. The resulting white solid product was collected by filtration, dried in air, and found to melt at 237-240°C.

Vinylsulphonyl fluoride may be prepared as described in United States Patent Specifications Nos. 2,653,973 and 2,884,452, and as described by L.Z.Soboronskii et. al., J. Gen. Chem. U.S.S.R., 28, 1913 (1958). The amine diazo precursors can be prepared from readily available intermediates by well known techniques.

This invention will be further illustrated by the following examples, which are included merely for the purpose of illustration and are not intended to limit the scope of the invention.

Examples 1-10 - Diazotization and Coupling of 2-Amino-5-ethylthio-1,3,4-thiadiazole

Sodium nitrite (3.6 g) was added in portions to 25 ml of concentrated sulphuric acid. The solution was cooled and 100 ml of 1:5 acid (1 part propionic acid:5 parts acetic acid, by weight) was added below 15°C. The mixture was cooled and 2-amino-5-ethylthio-1,3,4-thiadiazole (8.05 g, 0.05m) was added below 10°C. After being stirred at 0-5°C. for two hours, a 0.005 m aliquot of the diazonium salt was added to 0.005 m of each of the following couplers in water or dilute sulphuric acid, keeping the temperature below 5°C.

N-Ethyl-N-(2-sulphoethyl)-m-toluidine, K salt (Example 1)

N-Ethyl-N-(2-sulphoethyl)-2-methoxy-5-methylaniline, K salt (Example 2)

5-Acetamido-2-methyl-N-(2-sulphoethyl)aniline, K salt (Example 3)

N-(2-Sulphoethyl)-1,2,3,4-tetrahydro-2,2,4,7-tetramethylquinoline, K salt (Example 4)

N-(2-Sulphoethyl)-1,2,3,4-tetrahydro-2,2,4-trimethyl-quinoline, K salt (Example 5)

2,7-Dimethyl-N-(2-sulphoethyl)-1,2,3,4-tetrahydroquinoline, K salt (Example 6)

8-Methoxy-5-methyl-N-(2-sulphoethyl)-1,2,3,4-tetrahydroquinoline, K salt (Example 7)

2,7-Dimethyl-N-(2,3-disulphopropyl)-1,2,3,4-tetrahydroquinoline, K salt (Example 8)

2,3-Dihydro-3,6-dimethyl-N-(2-sulphoethyl)-1,4-benzoxazine, K salt (Example 9)

2,3-Dihydro-3-methyl-7-methoxy-N-(2-sulphoethyl)-1,4-benzoxazine, K salt (Example 10.

The mineral acid was neutralized with potassium acetate and the coupling mixture allowed to stand for one hour. Water was added to make a total volume of 200-300 ml. and the dyes were collected by filtration, washed with water, and dried in air.

The products usually contain about an equal weight of dye and potassium sulphate as they are isolated, and are used for dying polyamide fibres red shades without further purification. The dyes in the following tables are prepared in a similar manner. Neutralization using sodium hydroxide and ammonium hydroxide results in the corresponding sodium and ammonium salts, respectively.

TABLE 1

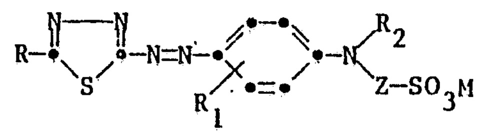

| R | $R_1$ | $R_2$ | Z | M |
|---|---|---|---|---|
| $5-CH_3$ | $2-CH_3$ | H | $-CH_2CH_2-$ | $K^+$ |
| $5-CH_2CH_3$ | 2-Cl | " | " | " |
| $5-CH_2CH(CH_3)$ | 2,5-di-Cl | " | " | " |
| $5-C_6H_5$ | $2,5-di-CH_3$ | " | " | " |
| $5-C_6H_{11}$ | $2,5-di-OCH_3$ | " | " | " |
| $5-C_6H_4-p-Cl$ | $3-OCH_3$ | $-C_2H_5$ | " | " |
| $5-C_6H_4-o-CH_3$ | $2-OCH_3$, $5-NHCOCH_3$ | H | " | " |
| $5-C_6H_4-m-OCH_3$ | $2-CH_3$, 3-Cl | " | " | " |
| $5-SCH_3$ | $2-OCH_3$, 5-Cl | " | " | " |
| " | $3-NHCOCH_3$ | $-C_2H_5$ | " | " |
| " | $3-NHCOC_2H_5$ | $-C_2H_4OCH_3$ | " | " |
| " | $3-NHCOCH_2OH$ | $-CH_2C_6H_5$ | " | " |
| " | $3-NHCOCH_2OCH_3$ | $-C_6H_{11}$ | " | " |
| " | $3-NHCOC_6H_5$ | $-CH_2C_6H_{11}$ | " | " |
| " | $3-NHCOOC_2H_5$ | $-CH_2CH_2OC_6H_5$ | " | " |
| " | $3-NHCONHC_2H_5$ | $-CH_2CH_2OH$ | " | " |

| | | | | |
|---|---|---|---|---|
| $5-OC_2H_5$ | $3-NHCOC_6H_{11}$ | $-CH_2CH(CH_3)_2$ | " | " |
| $5-SC_2H_5$ | $3-NHCOCH_2CN$ | $-CH_2CH_2CH_2CH_3$ | " | " |
| " | $3-NHCOCH_2OC_6H_5$ | $-CH_2CH_2OCOCH_3$ | " | " |
| " | $3-NHCOCH_2C_6H_5$ | $-CH_2CH_2CONH_2$ | " | " |
| " | $3-CH_3$ | $-CH_2CH_2NHCOCH_3$ | " | " |
| " | " | $-CH_2CH_2NHSO_2CH_3$ | " | " |
| " | " | $-CH_2CH_2SO_2NH_2$ | " | " |
| " | " | $-CH_2CH_2CH_2SO_2CH_3$ | " | " |
| 5-Cl | " | $-CH_2CH_2SCH_3$ | " | " |
| $5-SO_2CH_3$ | " | 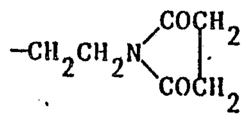 | $-CH_2CH_2CH_2-$ | $Na^+$ |
| $5-OC_4H_9-n$ | " | 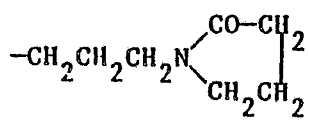 | " | " |
| $5-SCH_2CH_2OH$ | $3-OC_6H_5$ | 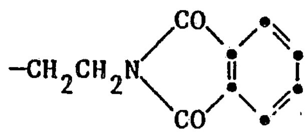 | " | $NH_4^+$ |

| | | | | |
|---|---|---|---|---|
| 5—$SCH_2CH_2COOCH_3$ | 3—$CH_3$ | —$C_6H_5$ | —$CH_2CH_2$— | $Na^+$ |
| 5—S—$CH_2CH_2OCCH_3$ (with =O on C) | " | —$CH_2$—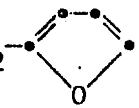 | —$CH_2CH(CH_2OC_6H_5)$— | " |
| 5—$SCH_2SC_6H_5$ | " | —$CH_2CH_2COOCH_3$ | —$CH_2CH(C_6H_5)$— | " |
| 5—$SO_2CH_3$ | " | —$CH_2CH_2CN$ | —$CH_2CH(CH_3)$— | " |
| 5—$SO_2NH_2$ | " | —$C_2H_5$ | —$CH_2CH(OH)CH_2$— | " |
| 5—$SO_2NHC_2H_5$ | 2—$SCH_3$ | H | —$CH_2CH_2CH_2CH_2$— | " |
| 5—SCN | 3—$CH_3$ | —$C_2H_4OC_2H_4OC_2H_5$ | —$CH_2CH(OCOCH_3)CH_2$— | " |
| 5—$SO_2N(CH_3)_2$ | " | —$CH_2CH(OH)CH_2Cl$ | —$CH_2CH_2$— | " |
| 5—$SO_3C_6H_5$ | 2—$OCH_3$, 5—$CH_3$ | $C_2H_5$ | " | " |
| 5—$SCH_2CH{=}CH_2$ | " | H | —$CH_2CH_2OCH_2CH_2$— | " |
| 5—$SCH_2CH_2OCH_3$ | " | H | " | " |
| 5—$SCH_2CH_2$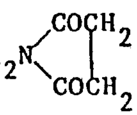 | " | " | —$CH_2CH_2SO_2CH_2CH_2$— | $K^+$ |
| 5—$SC_6H_{11}$ | 3—$CH_3$ | $C_2H_5$ | —$CH_2CH_2SCH_2CH_2$— | " |
| 5—$SC_6H_5$ | " | " | —$CH_2CH_2N(SO_2CH_3)CH_2CH_2$— | " |
| 5—$SO_2C_6H_5$ | " | " | —$CH_2CH_2NHSO_2CH_2CH_2CH_2CH_2$— | " |
| 5—I | " | " | —$CH_2CH_2SO_2NHCH_2CH_2$— | " |
| 5—Br | " | " | —$CH_2CH_2N(COCH_3)CH_2CH_2$— | " |

| | | | | |
|---|---|---|---|---|
| 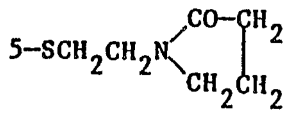 | " | " | $-CH_2CH_2CONHC_2H_4-$ | " |
| $5-SCH_2CH_2NHSO_2CH_3$ | " | " | $-CH_2CH_2NHCOCH_2-$ | " |
| $5-SCH_2CH_2NHCOCH_3$ | " | " | $-CH_2CH_2N(SO_2C_6H_5)CH_2CH_2-$ | " |
| $5-SCH_2CH_2OC_6H_5$ | " | " | $-CH_2CH_2SO_2N(CH_3)CH_2CH_2-$ | " |
| $5-SCH_2CH_2C_6H_5$ | " | " | $-CH_2CH_2SO_2N(C_6H_5)CH_2CH_2-$ | " |
| $5-SCH_2CH_2OC_2H_5$ | " | " | $-CH_2CH_2N(SO_2C_6H_{11})CH_2CH_2-$ | " |
| $5-SO_2C_6H_{11}$ | " | " | $-CH_2CH_2N(COCH_3)CH_2CH_2-$ | " |
| $5-CH_3$ | " | " | $-CH_2CH(CH_2OCH_3)-$ | " |
| " | " | " | $-CH_2CH(Cl)CH_2-$ | " |
| " | " | " | $-CH_2CH_2NHCONHC_2H_4-$ | " |
| $5-NHCOCH_3$ | " | " | $-CH_2CH_2NHCOOCH_2CH_2-$ | " |
| " | " | " | $-CH_2CH_2COOCH_2CH_2-$ | " |

TABLE 2

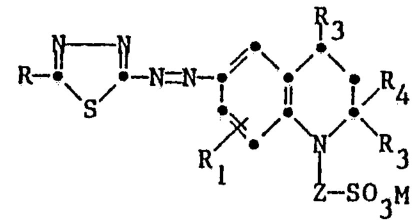

| R | $R_1$ | $R_3$ | $R_4$ | Z | M |
|---|---|---|---|---|---|
| H | H | $CH_3$ | $CH_3$ | $-CH_2CH_2-$ | $K^+$ |
| " | 7-$CH_3$ | " | " | " | " |
| " | 7-$OCH_3$ | " | " | " | " |
| 5-$CH_3$ | 7-Cl | " | " | " | " |
| 5-$CH_2CH_3$ | 5-$CH_3$, 8-$OCH_3$ | " | " | " | " |
| 5-$CH(CH_3)_2$ | 5,8-di-$OCH_3$ | " | " | " | " |
| 5-$CH_2CH(CH_3)_2$ | 5,8-di-$CH_3$ | " | " | " | " |
| 5-$C_6H_5$ | 5-Cl, 8-$OCH_3$ | " | " | " | " |
| 5-$C_6H_{11}$ | 8-$OCH_3$ | " | " | " | " |
| 5-$C_6H_4$-o-Cl | 8-$OC_2H_5$ | H | H | " | " |
| 5-$C_6H_4$-n-$CH_3$ | 7-$CH_3$ | " | " | " | " |
| 5-$C_6H_4$-p-$OCH_3$ | 7-$NHCOCH_3$ | $CH_3$ | $CH_3$ | " | $Na^+$ |
| 5-$OC_2H_5$ | 7-NHCOH | " | " | " | " |
| " | 7-$NHCOCH_2OCH_3$ | " | " | " | " |
| " | 7-$NHCOCH_2OC_6H_5$ | H | $CH(CH_3)_2$ | " | " |
| " | 7-$NHCOCH_2C_6H_5$ | " | " | " | " |
| " | 7-$NHCOCH_2Cl$ | " | " | " | " |

| | | | | | |
|---|---|---|---|---|---|
| " | 7–$NHCOC_6H_5$ | " | " | " | " |
| " | 7–$NHCOC_6H_{11}$ | $CH_3$ | $CH_3$ | " | " |
| 5–Cl | 7–$NHCONHC_2H_5$ | " | " | " | " |
| " | 7–$NHSO_2CH_3$ | " | " | " | " |
| " | 7–$NHCOCH_2CN$ | " | " | " | " |
| " | 7–$NHCOCH_2OH$ | " | " | " | " |
| 5–I | 7–$NHCOOC_2H_5$ | " | " | $-CH_2CH_2CH_2-$ | " |
| 5–Br | 7–$NHCOCH_2CH_2OC(=O)CH_3$ | " | " | " | " |
| 5–$SO_2CH_3$ | 8–$OC_4H_9$–n | H | $CH_3$ | $-CH_2CH_2-$ | " |
| 5–$SO_2NH_2$ | 7–$CH_3$ | $CH_3$ | H | " | " |
| 5–$SO_2N(CH_3)_2$ | 7–NHCO– 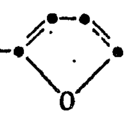 | " | $CH_3$ | " | " |
| 5–$SO_2N(C_2H_5)_2$ | 7–$OC_2H_5$ | " | " | " | " |
| 5–$SO_2NHC_3H_6OCH_3$ | 7–$OC_4H_9$–n | " | " | " | " |
| 5–$SO_2CH_2CH_2OC_2H_5$ | 7–$CH_3$ | " | H | " | " |
| 5–$SC_6H_5$ | " | " | " | " | " |
| 5–$SC_6H_{11}$ | " | " | " | $-CH_2CH_2CH_2CH_2-$ | " |
| 5–$SO_2C_6H_5$ | " | " | " | $-CH_2CH_2-$ | " |
| 5–$SO_3C_6H_5$ | " | " | " | " | " |

| | | | | | |
|---|---|---|---|---|---|
| 5-$SCH_2CH_2OH$ | " | " | " | " | " |
| 5-$SCH_2CH{=}CH_3$ | " | " | " | $-CH_2CH_2SO_2CH_2CH_2-$ | $K^+$ |
| 5-$SCH_2COOC_2H_5$ | " | " | " | $-CH_2CH_2OCH_2CH_2-$ | " |
| 5-$SCH_2C_6H_5$ | " | " | " | $-CH_2CH_2SCH_2CH_2-$ | " |
| 5-$SCH_2C_6H_{11}$ | " | " | " | $-CH_2CH(C_6H_5)-$ | " |
| 5-$SCH_2CH_2OC_2H_5$ | " | " | " | $-CH_2CH(CH_3)-$ | " |
| 5-SCN | " | " | " | $-CH_2CH(OH)CH_2-$ | " |
| 5-$SCH_2CH_2NHCOCH_3$ | " | " | " | $-CH_2CH(Cl)CH_2-$ | " |
| 5-$SCH_2CH_2$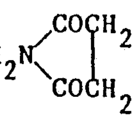 | " | " | " | $-CH_2CH(CH_2OCH_2CH_3)-$ | " |
| 5-$SCH_2CH_2OC_6H_5$ | " | " | " | $-CH_2CH(CH_2OC_6H_5)-$ | " |
| 5-$SCH_2CH_3$ | " | " | " | $-CH_2CH_2N(SO_2CH_3)CH_2CH_2-$ | " |
| " | " | " | " | $-CH_2CH_2CH_2NHSO_2CH_2CH_2-$ | " |
| " | " | " | " | $-CH_2CH_2SO_2NHCH_2CH_2-$ | " |
| " | " | " | " | $-CH_2CH_2NHCOCH_2-$ | " |
| " | " | " | " | $-CH_2CH_2NHCOOCH_2CH_2-$ | " |
| " | " | " | " | $-CH_2CH_2COOCH_2CH_2-$ | " |
| " | " | " | " | $-CH_2CH_2CONHC_2H_4-$ | " |
| 5-$SCH_3$ | " | " | " | $-CH_2CH_2NHCONHC_2H_4-$ | " |
| " | " | " | " | $-CH_2CH_2N(SO_2C_6H_5)CH_2CH_2-$ | " |
| " | " | " | " | $-CH_2CH_2N(COCH_3)CH_2CH_2-$ | " |

| | | | | | |
|---|---|---|---|---|---|
| " | " | " | " | $-CH_2CH_2SO_2N(C_6H_5)CH_2CH_2-$ | " |
| 5-$NHCOCH_3$ | " | " | " | $-CH_2CH_2SO_2N(CH_3)CH_2CH_2-$ | " |

TABLE 3

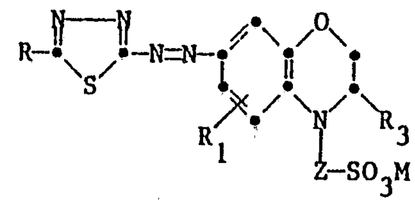

| R | $R_1$ | $R_3$ | Z | M |
|---|---|---|---|---|
| H | 6—$CH_3$ | H | —$CH_2CH_2$— | $K^+$ |
| " | H | H | " | " |
| " | " | $CH_3$ | " | " |
| 5—$CH_3$ | 6—$CH_3$ | " | " | " |
| 5—$CH(CH_3)_2$ | " | " | —$CH_2CH_2CH_2CH_2$— | " |
| 5—$CH_2CH(CH_3)_2$ | 6—$OCH_3$ | " | " | " |
| 5—$C_6H_5$ | " | " | —$CH_2CH_2$— | " |
| 5—$C_6H_4$—p—Cl | 6—$CH_3$ | " | —$CH_2CH_2OCH_2CH_2$— | " |
| 5—$C_6H_4$—p—$OCH_3$ | " | " | —$CH_2CH_2SO_2CH_2CH_2$— | " |
| 5—$C_6H_4$—n—$CH_3$ | " | " | —$CH_2CH_2SCH_2CH_2$— | " |
| 5—$OC_2H_5$ | " | " | —$CH_2CH(CH_3)$ | " |
| 5—$OCH(CH_3)_2$ | " | " | —$CH_2CH(C_6H_5)$— | " |
| 5—$C_6H_{11}$ | 6—$OC_2H_5$ | " | —$CH_2CH_2$— | " |
| 5—SCN | 6—$NHCOCH_3$ | " | " | $Na^+$ |
| 5—$SCH_3$ | 6—NHCOH | " | " | " |
| 5—$SCH_2CH(CH_3)_2$ | 6—$NHCOCH_2CH_2OCH_3$ | " | " | " |

| | | | | |
|---|---|---|---|---|
| 5-$SCH_2CH{=}CH_2$ | 6-$NHCOCH_2Cl$ | " | " | " |
| 5-$SC_6H_{11}$ | 6-$NHCOCH_2CN$ | " | " | " |
| 5-$SC_6H_5$ | 6-$NHCOCH_2CONH_2$ | " | " | " |
| 5-$SCH_2C_6H_5$ | 6-$NHCOCH_2OC_6H_5$ | " | " | " |
| 5-$SCH_2CH_2OC_6H_5$ | 6-$NHCOOC_2H_5$ | " | " | " |
| 5-$SCH_2CH_2OC_2H_5$ | 6-$NHCONHC_2H_5$ | " | " | " |
| 5-$SCH_2CH_2OH$ | 6-$NHCOC_6H_5$ | " | " | " |
| 5-$SCH_2CH_2Cl$ | 6-$NHCOC_6H_{11}$ | " | " | " |
| 5-$SCH_2COOC_2H_5$ | 6-$NHSO_2CH_3$ | " | " | " |
| 5-$SCH_2CH_2OCOCH_3$ | 6-$NHCOCH_2CH_2OCOCH_3$ | " | " | " |
| 5-$SCH_2C_6H_{11}$ | 6-NHCO- 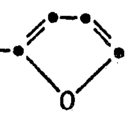 | " | " | " |
| 5-$SO_2CH_3$ | 6-$NHCOCH_2CH_2CH_2OH$ | " | " | " |
| 5-$SO_2C_4H_9$-n | 6-$CH_3$ | " | $-CH_2CH_2CH_2-$ | " |
| 5-$SO_2CH_2CH_2OCH_3$ | " | " | $-CH_2CH_2-$ | " |
| 5-$SO_2C_6H_5$ | " | " | " | " |
| 5-$SO_2C_6H_{11}$ | " | " | " | " |
| 5-$SO_2CH_2C_6H_5$ | " | " | " | " |
| 5-$SO_2CH_2CH_2OH$ | " | " | " | " |
| 5-$SCH_2CH_2$ 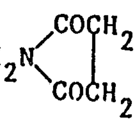 | " | " | " | " |

| | | | | |
|---|---|---|---|---|
| 5-$SCH_2CH_2NHCOCH_3$ | " | " | " | " |
| 5-$SCH_2CH_2$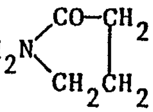 | " | H | $-CH_2CH(CH_3)-$ | " |
| 5-$SO_2NH_2$ | " | $CH_3$ | $-CH_2CH_2N(SO_2CH_3)CH_2CH_2-$ | $K^+$ |
| 5-$SO_2NHC_3H_6OCH_3$ | " | " | $-CH_2CH_2SO_2NHCH_2CH_2-$ | " |
| 5-$SO_2NH(CH_3)_2$ | " | " | $-CH_2CH_2SO_2N(CH_3)CH_2CH_2CH_2-$ | " |
| 5-$SO_2NHC_2H_5$ | " | " | $-CH_2CH_2SO_2N(C_6H_5)CH_2CH_2-$ | " |
| 5-$SO_2NHC_6H_{11}$ | " | " | $-CH_2CH_2SO_2N(C_6H_{11})CH_2CH_2-$ | " |
| 5-$SO_3C_6H_5$ | " | " | $-CH_2CH_2CH_2CH_2N(SO_2CH_3)CH_2CH_2-$ | " |
| 5-$SO_2NHC_6H_5$ | " | " | $-CH_2CH_2N(SO_2C_6H_4$-p-$CH_3)-CH_2CH_2-$ | " |
| 5-$NHCOCH_3$ | " | " | $-CH_2CH_2N(SO_2C_6H_{11})CH_2CH_2-$ | " |
| 5-$SC_2H_5$ | " | " | $-CH_2CH(Cl)CH_2-$ | " |
| " | " | " | $-CH_2CH(OH)CH_2-$ | " |
| " | " | " | $-CH_2CH(CH_2OCH_3)-$ | " |
| " | " | " | $-CH_2CH(CH_2OC_6H_5)-$ | " |
| " | " | " | $-CH_2CH(OCOCH_3)CH_2-$ | " |
| " | " | " | $-CH_2CH_2NHCOCH_2-$ | " |
| " | " | " | $-CH_2CH_2CONHC_2H_4-$ | " |
| " | " | " | $-CH_2CH_2NHCOOCH_2CH_2-$ | " |
| " | " | " | $-CH_2CH_2COOCH_2CH_2-$ | " |
| " | " | " | $-CH_2CH_2NHCONHCH_2CH_2-$ | " |
| " | " | " | $-CH_2CH_2N(COCH_3)CH_2CH_2-$ | " |
| " | " | " | $-CH_2CH_2N(COC_6H_5)CH_2CH_2-$ | " |

TABLE 4

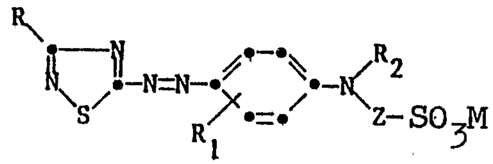

| R | $R_1$ | $R_2$ | Z | M |
|---|---|---|---|---|
| $3-CH_3$ | $2-CH_3$ | H | $-CH_2CH_2-$ | $K^+$ |
| " | 2-Cl | " | " | " |
| " | 2,5-di-Cl | " | " | " |
| " | $2,5-di-CH_3$ | " | " | " |
| " | $2,5-di-OCH_3$ | " | " | " |
| " | $3-OCH_3$ | $-C_2H_5$ | " | " |
| " | $2-OCH_3$, $5-NHCOCH_3$ | H | " | " |
| $3-SCH_3$ | $2-CH_3$, 3-Cl | " | " | " |
| $3-C_6H_5$ | $2-OCH_3$, 5-Cl | " | " | " |
| $3-C_6H_4-p-Cl$ | $3-NHCOCH_3$ | $-C_2H_5$ | " | " |
| $3-C_6H_4-o-CN$ | $3-NHCOC_2H_5$ | $-C_2H_4OCH_3$ | " | " |
| " | $3-NHCOCH_2OH$ | $-CH_2C_6H_5$ | " | " |
| " | $3-NHCOCH_2OCH_3$ | $-C_6H_{11}$ | " | " |
| " | $3-NHCOC_6H_5$ | $-CH_2C_6H_{11}$ | " | " |
| " | $3-NHCOOC_2H_5$ | $-CH_2CH_2OC_6H_5$ | " | " |
| " | $3-NHCONHC_2H_5$ | $-CH_2CH_2OH$ | " | " |
| " | $3-NHCOC_6H_{11}$ | $-CH_2CH(CH_3)_2$ | " | " |
| $3-C_6H_5$ | $3-NHCOCH_2CN$ | $-CH_2CH_2CH_2CH_3$ | " | " |

| | | | | |
|---|---|---|---|---|
| " | 3-$NHCOCH_2OC_6H_5$ | $-CH_2CH_2OCOCH_3$ | " | " |
| " | 3-$NHCOCH_2C_6H_5$ | $-CH_2CH_2CONH_2$ | " | " |
| " | 3-$CH_3$ | $-CH_2CH_2NHCOCH_3$ | " | " |
| " | " | $-CH_2CH_2NHSO_2CH_3$ | " | " |
| 3-$C_6H_4$-p-$CH_3$ | " | $-CH_2CH_2SO_2NH_2$ | " | " |
| 3-$C_6H_5$ | " | $-CH_2CH_2CH_2SO_2CH_3$ | " | " |
| " | " | $-CH_2CH_2SCH_3$ | " | " |
| " | " | 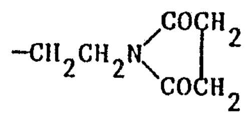 | $-CH_2CH_2CH_2-$ | $Na^+$ |
| " | " | 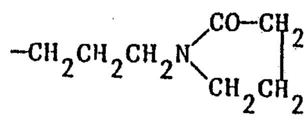 | " | " |
| " | 3-$OC_6H_5$ | 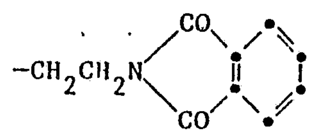 | " | $NH_4^+$ |
| " | 3-$CH_3$ | $-C_6H_5$ | $-CH_2CH_2-$ | $Na^+$ |
| " | " | 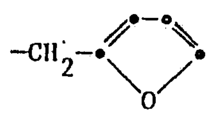 | $-CH_2CH(CH_2OC_6H_5)-$ | " |
| 3-$SO_2CH_3$ | " | $-CH_2CH_2COOCH_3$ | $-CH_2CH(C_6H_5)-$ | " |
| 3-$SCH_2CH_2COOCH_3$ | " | $-CH_2CH_2CN$ | $-CH_2CH(CH_3)-$ | " |

| | | | | |
|---|---|---|---|---|
| 3-$SCH_2C_6H_5$ | " | $-C_2H_5$ | $-CH_2CH(OH)CH_2-$ | " |
| 3-$SCH_2CH_2OCH_3$ | 2-$SCH_3$ | H | $-CH_2CH_2CH_2CH_2-$ | " |
| 3-$SC_6H_{11}$ | 3-$CH_3$ | $-C_2H_4OC_2H_4OC_2H_5$ | $-CH_2CH(OCOCH_3)CH_2-$ | " |
| 3-$SC_2H_5$ | " | $-CH_2CH(OH)CH_2Cl$ | $-CH_2CH_2-$ | " |
| " | 2-$OCH_3$, 5-$CH_3$ | $C_2H_5$ | " | " |
| " | " | H | $-CH_2CH_2OCH_2CH_2-$ | " |
| " | " | H | " | " |
| " | " | " | $-CH_2CH_2SO_2CH_2CH_2-$ | $K^+$ |
| 3-$SCH_2COOCH_3$ | 3-$CH_3$ | $C_2H_5$ | $-CH_2CH_2SCH_2CH_2-$ | " |
| " | " | " | $-CH_2CH_2N(SO_2CH_3)CH_2CH_2-$ | " |
| " | " | " | $-CH_2CH_2NHSO_2CH_2CH_2CH_2CH_2-$ | " |
| " | " | " | $-CH_2CH_2SO_2NHCH_2CH_2-$ | " |
| 3-$SCH_3$ | " | " | $-CH_2CH_2N(COCH_3)CH_2CH_2-$ | " |
| " | " | " | $-CH_2CH_2CONHC_2H_4-$ | " |
| " | " | " | $-CH_2CH_2NHCOCH_2-$ | " |
| " | " | " | $-CH_2CH_2N(SO_2C_6H_5)CH_2CH_2-$ | " |
| 3-$SCH_2CH(CH_3)_2$ | " | " | $-CH_2CH_2SO_2N(CH_3)CH_2CH_2-$ | " |
| " | " | " | $-CH_2CH_2SO_2N(C_6H_5)CH_2CH_2-$ | " |
| " | " | " | $-CH_2CH_2N(SO_2C_6H_{11})CH_2CH_2-$ | " |
| " | " | " | $-CH_2CH_2N(COCH_3)CH_2CH_2-$ | " |
| " | " | " | $-CH_2CH(CH_2OCH_3)-$ | " |
| " | " | " | $-CH_2CH(Cl)CH_2-$ | " |
| " | " | " | $-CH_2CH_2NHCONHC_2H_4-$ | " |

| | | | | |
|---|---|---|---|---|
| " | " | " | $-CH_2CH_2NHCOOCH_2CH_2-$ | " |
| " | " | " | $-CH_2CH_2COOCH_2CH_2-$ | " |

TABLE 5

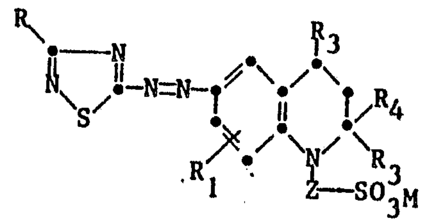

| R | $R_1$ | $R_3$ | $R_4$ | Z | M |
|---|---|---|---|---|---|
| 3–$CH_3$ | H | $CH_3$ | $CH_3$ | –$CH_2CH_2$– | $K^+$ |
| " | 7–$CH_3$ | " | " | " | " |
| " | 7–$OCH_3$ | " | " | " | " |
| " | 7–Cl | " | " | " | " |
| " | 5–$CH_3$, 8–$OCH_3$ | " | " | " | " |
| " | 5,8–di–$OCH_3$ | " | " | " | " |
| " | 5,8–di–$CH_3$ | " | " | " | " |
| " | 5–Cl, 8–$OCH_3$ | " | " | " | " |
| " | 8–$OCH_3$ | " | " | " | " |
| " | 8–$OC_2H_5$ | H | H | " | " |
| 3–$SCH_3$ | 7–$CH_3$ | " | " | " | " |
| 3–$C_6H_5$ | 7–$NHCOCH_3$ | $CH_3$ | $CH_3$ | " | $Na^+$ |
| " | 7–NHCOH | " | " | " | " |
| " | 7–$NHCOCH_2OCH_3$ | " | " | " | " |
| " | 7–$NHCOCH_2OC_6H_5$ | H | $CH(CH_3)_2$ | " | " |
| " | 7–$NHCOCH_2C_6H_5$ | " | " | " | " |

| | | | | | |
|---|---|---|---|---|---|
| " | 7–$NHCOCH_2Cl$ | " | " | " | " |
| " | 7–$NHCOC_6H_5$ | " | " | " | " |
| " | 7–$NHCOC_6H_{11}$ | $CH_3$ | $CH_3$ | " | " |
| " | 7–$NHCONHC_2H_5$ | " | " | " | " |
| " | 7–$NHSO_2CH_3$ | " | " | " | " |
| " | 7–$NHCOCH_2CN$ | " | " | " | " |
| 3–$C_6H_4$–o–CN | 7–$NHCOCH_2OH$ | " | " | " | " |
| " | 7–$NHCOOC_2H_5$ | " | " | –$CH_2CH_2CH_2$– | " |
| " | 7–$NHCOCH_2CH_2OCCH_3$ (C=O) | " | " | " | " |
| " | 8–$OC_4H_9$–n | H | $CH_3$ | –$CH_2CH_2$– | " |
| 3–$C_6H_4$–p–$CH_3$ | 7–$CH_3$ | $CH_3$ | H | " | " |
| 3–$C_6H_4$–o–Cl | 7–NHCO– 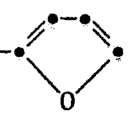 | " | $CH_3$ | " | " |
| 3–$SO_2CH_3$ | 7–$OC_2H_5$ | " | " | " | " |
| 3–$SC_6H_{11}$ | 7–$OC_4H_9$–n | " | " | " | " |
| 3–$SCH_2CH_2OCH_3$ | 7–$CH_3$ | " | H | " | " |
| 3–$SCH_2CH_2COOCH_3$ | " | " | " | " | " |
| 3–$SCH_2C_6H_5$ | " | " | " | –$CH_2CH_2CH_2CH_2$– | " |
| 3–$CH_2CH_3$ | " | " | " | –$CH_2CH_2$– | " |
| 3–$SCH_2COOCH_3$ | " | " | " | " | " |
| 3–$SCH_2CH_2COOC_2H_5$ | " | " | " | " | " |
| 3–$SCH_2CH_2COOCH(CH_3)_2$ | " | " | " | –$CH_2CH_2SO_2CH_2CH_2$– | $K^+$ |

| | | | | | |
|---|---|---|---|---|---|
| $3-SO_2C_4H_9-n$ | " | " | " | $-CH_2CH_2OCH_2CH_2-$ | " |
| $3-SCH_2CH_2CONHC_4H_9-n$ | " | " | " | $-CH_2CH_2SCH_2CH_2-$ | " |
| $3-SCH_3$ | " | " | " | $-CH_2CH(C_6H_5)-$ | " |
| " | " | " | " | $-CH_2CH(CH_3)-$ | " |
| $3-SC_2H_5$ | " | " | " | $-CH_2CH(OH)CH_2-$ | " |
| " | " | " | " | $-CH_2CH(Cl)CH_2-$ | " |
| " | " | " | " | $-CH_2CH(CH_2OCH_2CH_3)-$ | " |
| " | " | " | " | $-CH_2CH(CH_2OC_6H_5)-$ | " |
| " | " | " | " | $-CH_2CH_2N(SO_2CH_3)CH_2CH_2-$ | " |
| " | " | " | " | $-CH_2CH_2CH_2NHSO_2CH_2CH_2-$ | " |
| " | " | " | " | $-CH_2CH_2SO_2NHCH_2CH_2-$ | " |
| " | " | " | " | $-CH_2CH_2NHCOCH_2-$ | " |
| " | " | " | " | $-CH_2CH_2NHCOOCH_2CH_2-$ | " |
| " | " | " | " | $-CH_2CH_2COOCH_2CH_2-$ | " |
| " | " | " | " | $-CH_2CH_2CONHC_2H_4-$ | " |
| " | " | " | " | $-CH_2CH_2NHCONHC_2H_4-$ | " |
| " | " | " | " | $-CH_2CH_2N(SO_2C_6H_5)CH_2CH_2-$ | " |
| " | " | " | " | $-CH_2CH_2N(COCH_3)CH_2CH_2-$ | " |
| " | " | " | " | $-CH_2CH_2SO_2N(C_6H_5)CH_2CH_2-$ | " |
| " | " | " | " | $-CH_2CH_2SO_2N(CH_3)CH_2CH_2-$ | " |

TABLE 6

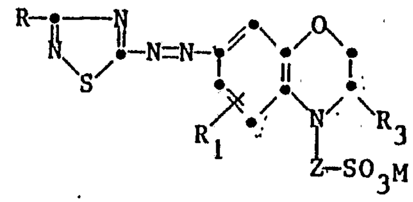

| R | $R_1$ | $R_3$ | Z | M |
|---|---|---|---|---|
| $3-CH_3$ | $6-CH_3$ | H | $-CH_2CH_2-$ | $K^+$ |
| " | H | H | " | " |
| " | " | $CH_3$ | " | " |
| " | $6-CH_3$ | " | " | " |
| " | " | " | $-CH_2CH_2CH_2CH_2-$ | " |
| " | $6-OCH_3$ | " | " | " |
| $3-SCH_3$ | " | " | $-CH_2CH_2-$ | " |
| $3-CH_2CH_3$ | $6-CH_3$ | " | $-CH_2CH_2OCH_2CH_2-$ | " |
| $3-SCH_2CH_2OCH_3$ | " | " | $-CH_2CH_2SO_2CH_2CH_2-$ | " |
| $3-SCH_2CH_2OC_2H_5$ | " | " | $-CH_2CH_2SCH_2CH_2-$ | " |
| $3-SCH_2CH_2COOCH_3$ | " | " | $-CH_2CH(CH_3)$ | " |
| $3-SCH_2COOCH_2CH_3$ | " | " | $-CH_2CH(C_6H_5)-$ | " |
| $3-SCH_2C_6H_5$ | $6-OC_2H_5$ | " | $-CH_2CH_2-$ | " |
| $3-SC_6H_{11}$ | $6-NHCOCH_3$ | " | " | $Na^+$ |
| $3-SCH_3$ | $6-NHCOH$ | " | " | " |
| " | $6-NHCOCH_2CH_2OCH_3$ | " | " | " |

| | | | | |
|---|---|---|---|---|
| " | 6–$NHCOCH_2Cl$ | " | " | " |
| " | 6–$NHCOCH_2CN$ | " | " | " |
| " | 6–$NHCOCH_2CONH_2$ | " | " | " |
| " | 6–$NHCOCH_2OC_6H_5$ | " | " | " |
| 3–$SO_2CH_3$ | 6–$NHCOOC_2H_5$ | " | " | " |
| 3–$SO_2C_4H_9$–n | 6–$NHCONHC_2H_5$ | " | " | " |
| 3–$C_6H_5$ | 6–$NHCOC_6H_5$ | " | " | " |
| 3–$C_6H_4$–o–CN | 6–$NHCOC_6H_{11}$ | " | " | " |
| 3–$C_6H_4$–o–Cl | 6–$NHSO_2CH_3$ | " | " | " |
| 3–$C_6H_4$–p–$CH_3$ | 6–$NHCOCH_2CH_2OCOCH_3$ | " | " | " |
| 3–$C_6H_4$–m–$CH_3$ | 6–NHCO– 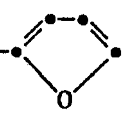 | " | " | " |
| 3–$C_6H_4$–o–$CH_3$ | 6–$NHCOCH_2CH_2CH_2OH$ | " | " | " |
| 3–$C_6H_4$–o–$CONH_2$ | 6–$CH_3$ | " | –$CH_2CH_2CH_2$– | " |
| 3–$C_6H_4$–o–CN | " | " | –$CH_2CH_2$– | " |
| 3–S–$CH_2CH_2OC_6H_5$ | " | " | " | " |
| 3–$SO_2C_4H_9$–n | " | " | " | " |
| 3–$SO_2CH_2CH_2COOCH_3$ | " | " | " | " |
| 3–$SO_2CH_2COOCH_3$ | " | " | " | " |
| 3–$SO_2C_6H_{11}$ | " | " | " | " |
| 3–$SO_2CH_2CH_3$ | " | " | " | " |
| 3–$SO_2CH_2CH_2OCH_3$ | " | H | –$CH_2CH(CH_3)$– | " |
| 3–$SCH_2CH_2CONHC_2H_4OH$ | " | $CH_3$ | –$CH_2CH_2N(SO_2CH_3)CH_2CH_2$– | $K^+$ |

| | | | | |
|---|---|---|---|---|
| 3-$SCH_2CH_3$ | " | " | $-CH_2CH_2SO_2NHCH_2CH_2-$ | " |
| " | " | " | $-CH_2CH_2SO_2N(CH_3)CH_2CH_2CH_2-$ | " |
| " | " | " | $-CH_2CH_2SO_2N(C_6H_5)CH_2CH_2-$ | " |
| " | " | " | $-CH_2CH_2SO_2N(C_6H_{11})CH_2CH_2-$ | " |
| " | " | " | $-CH_2CH_2CH_2CH_2N(SO_2CH_3)CH_2CH_2-$ | " |
| " | " | " | $-CH_2CH_2N(SO_2C_6H_4$-p-$CH_3)-CH_2CH_2-$ | " |
| " | " | " | $-CH_2CH_2N(SO_2C_6H_{11})CH_2CH_2-$ | " |
| 3-$C_6H_5$ | " | " | $-CH_2CH(Cl)CH_2-$ | " |
| " | " | " | $-CH_2CH(OH)CH_2-$ | " |
| " | " | " | $-CH_2CH(CH_2OCH_3)-$ | " |
| " | " | " | $-CH_2CH(CH_2OC_6H_5)-$ | " |
| " | " | " | $-CH_2CH(OCOCH_3)CH_2-$ | " |
| " | " | " | $-CH_2CH_2NHCOCH_2-$ | " |
| " | " | " | $-CH_2CH_2CONHC_2H_4-$ | " |
| " | " | " | $-CH_2CH_2NHCOOCH_2CH_2-$ | " |
| " | " | " | $-CH_2CH_2COOCH_2CH_2-$ | " |
| " | " | " | $-CH_2CH_2NHCONHCH_2CH_2-$ | " |
| " | " | " | $-CH_2CH_2N(COCH_3)CH_2CH_2-$ | " |
| " | " | " | $-CH_2CH_2N(COC_6H_5)CH_2CH_2-$ | " |

TABLE 7

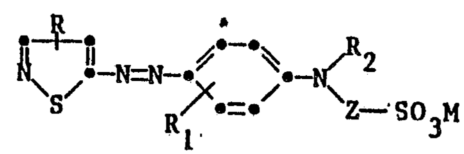

| R | $R_1$ | $R_2$ | Z | M |
|---|---|---|---|---|
| 3—$CH_3$, 4—Br | 2—$CH_3$ | H | —$CH_2CH_2$— | $K^+$ |
| " | 2—Cl | " | " | " |
| " | 2,5—di—Cl | " | " | " |
| " | 2,5—di—$CH_3$ | " | " | " |
| " | 2,5—di—$OCH_3$ | " | " | " |
| " | 3—$OCH_3$ | —$C_2H_5$ | " | " |
| " | 2—$OCH_3$, 5—$NHCOCH_3$ | H | " | " |
| " | 2—$CH_3$, 3—Cl | " | " | " |
| " | 2—$OCH_3$, 5—Cl | " | " | " |
| " | 3—$NHCOCH_3$ | —$C_2H_5$ | " | " |
| " | 3—$NHCOC_2H_5$ | —$C_2H_4OCH_3$ | " | " |
| " | 3—$NHCOCH_2OH$ | —$CH_2C_6H_5$ | " | " |
| " | 3—$NHCOCH_2OCH_3$ | —$C_6H_{11}$ | " | " |
| " | 3—$NHCOC_6H_5$ | —$CH_2C_6H_{11}$ | " | " |
| " | 3—$NHCOOC_2H_5$ | —$CH_2CH_2OC_6H_5$ | " | " |
| 3—$CH_3$—4—Cl | 3—$NHCONHC_2H_5$ | —$CH_2CH_2OH$ | " | " |
| " | 3—$NHCOC_6H_{11}$ | —$CH_2CH(CH_3)_2$ | " | " |
| " | 3—$NHCOCH_2CN$ | —$CH_2CH_2CH_2CH_3$ | " | " |

| | | | | |
|---|---|---|---|---|
| " | 3-NHCOCH$_2$OC$_6$H$_5$ | −CH$_2$CH$_2$OCOCH$_3$ | " | " |
| 3−CH$_3$−4−CN | 3-NHCOCH$_2$C$_6$H$_5$ | −CH$_2$CH$_2$CONH$_2$ | " | " |
| 3−CH$_3$−4−COOC$_2$H$_5$ | 3−CH$_3$ | −CH$_2$CH$_2$NHCOCH$_3$ | " | " |
| " | " | −CH$_2$CH$_2$NHSO$_2$CH$_3$ | " | " |
| " | " | −CH$_2$CH$_2$SO$_2$NH$_2$ | " | " |
| " | " | −CH$_2$CH$_2$CH$_2$SO$_2$CH$_3$ | " | " |
| 3−CH$_3$−4−SCH$_2$CH=CH$_2$ | " | −CH$_2$CH$_2$SCH$_3$ | " | " |
| " | " | −CH$_2$CH$_2$ 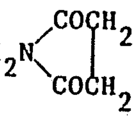 | −CH$_2$CH$_2$CH$_2$− | Na$^+$ |
| " | " | −CH$_2$CH$_2$CH$_2$ 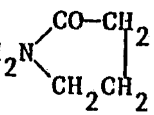 | " | " |
| 3−CH$_3$−4−SO$_2$C$_2$H$_5$ | 3−OC$_6$H$_5$ | −CH$_2$CH$_2$ 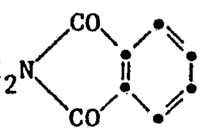 | " | NH$_4^+$ |
| 3−CH$_3$−4−SC$_6$H$_{11}$ | 3−CH$_3$ | −C$_6$H$_5$ | −CH$_2$CH$_2$− | Na$^+$ |
| 3−CH$_3$−4−OC$_2$H$_5$ | " | −CH$_2$− 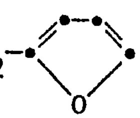 | −CH$_2$CH(CH$_2$OC$_6$H$_5$)− | " |
| 3−Cl−4−CN | " | −CH$_2$CH$_2$COOCH$_3$ | −CH$_2$CH(C$_6$H$_5$)− | " |
| 3−CH$_3$−4−SCN | " | −CH$_2$CH$_2$CN | −CH$_2$CH(CH$_3$)− | " |
| 3−Br−4−COOCH$_3$ | " | −C$_2$H$_5$ | −CH$_2$CH(OH)CH$_2$− | " |
| 3−CH$_3$−4−COOC$_2$H$_5$ | 2−SCH$_3$ | H | −CH$_2$CH$_2$CH$_2$CH$_2$− | " |
| 3−CH$_3$−4−CONH$_2$ | 3−CH$_3$ | −C$_2$H$_4$OC$_2$H$_4$OC$_2$H$_5$ | −CH$_2$CH(OCOCH$_3$)CH$_2$− | " |

| | | | | |
|---|---|---|---|---|
| $3-CH_3-4-CONHC_2H_4OH$ | " | $-CH_2CH(OH)CH_2Cl$ | $-CH_2CH_2-$ | " |
| $3-CH_3-4-CONHC_4H_9-n$ | $2-OCH_3$, $5-CH_3$ | $C_2H_5$ | " | " |
| $3-CH_3-4-OC_6H_5$ | " | H | $-CH_2CH_2OCH_2CH_2-$ | " |
| $3-CH_3-4-OC_6H_4-p-CH_3$ | " | H | " | " |
| $3-CH_3-4-SC_6H_5$ | " | " | $-CH_2CH_2SO_2CH_2CH_2-$ | $K^+$ |
| $3-CH_3-4-SCH_2CH_2OH$ | $3-CH_3$ | $C_2H_5$ | $-CH_2CH_2SCH_2CH_2-$ | " |
| $3-CH_3-4-SCH_2CH_3$ | " | " | $-CH_2CH_2N(SO_2CH_3)CH_2CH_2-$ | " |
| $3-CH_3-4-S-$ 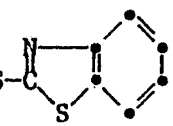 | " | " | $-CH_2CH_2NHSO_2CH_2CH_2CH_2CH_2-$ | " |
| $3-CH_3-4-Br$ | " | " | $-CH_2CH_2SO_2NHCH_2CH_2-$ | " |
| " | " | " | $-CH_2CH_2N(COCH_3)CH_2CH_2-$ | " |
| " | " | " | $-CH_2CH_2CONHC_2H_4-$ | " |
| " | " | " | $-CH_2CH_2NHCOCH_2-$ | " |
| " | " | " | $-CH_2CH_2N(SO_2C_6H_5)CH_2CH_2-$ | " |
| $3-CH_3-4-CONH_2$ | " | " | $-CH_2CH_2SO_2N(CH_3)CH_2CH_2-$ | " |
| $3-CH_3-4-CONHC_3H_6OCH_3$ | " | " | $-CH_2CH_2SO_2N(C_6H_5)CH_2CH_2-$ | " |
| $3-CH_3-4-Cl$ | " | " | $-CH_2CH_2N(SO_2C_6H_{11})CH_2CH_2-$ | " |
| " | " | " | $-CH_2CH_2N(COCH_3)CH_2CH_2-$ | " |
| " | " | " | $-CH_2CH(CH_2OCH_3)-$ | " |
| " | " | " | $-CH_2CH(Cl)CH_2-$ | " |
| " | " | " | $-CH_2CH_2NHCONHC_2H_4-$ | " |

| | | | | |
|---|---|---|---|---|
| " | " | " | $-CH_2CH_2NHCOOCH_2CH_2-$ | " |
| " | " | " | $-CH_2CH_2COOCH_2CH_2-$ | " |

TABLE 8

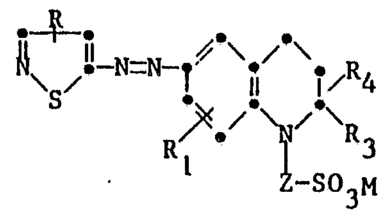

| R | $R_1$ | $R_3$ | $R_4$ | Z | M |
|---|---|---|---|---|---|
| $3-CH_3-4-Br$ | H | $CH_3$ | $CH_3$ | $-CH_2CH_2-$ | $K^+$ |
| " | $7-CH_3$ | " | " | " | " |
| " | $7-OCH_3$ | " | " | " | " |
| " | 7-Cl | " | " | " | " |
| " | $5-CH_3$, $8-OCH_3$ | " | " | " | " |
| " | $5,8-di-OCH_3$ | " | " | " | " |
| " | $5,8-di-CH_3$ | " | " | " | " |
| " | 5-Cl, $8-OCH_3$ | " | " | " | " |
| " | $8-OCH_3$ | " | " | " | " |
| " | $8-OC_2H_5$ | H | H | " | " |
| " | $7-CH_3$ | " | " | " | " |
| $3-CH_3-4-CN$ | $7-NHCOCH_3$ | $CH_3$ | $CH_3$ | " | $Na^+$ |
| " | 7-NHCOH | " | " | " | " |
| " | $7-NHCOCH_2OCH_3$ | " | " | " | " |
| $3-CH_3-4-COOC_2H_5$ | $7-NHCOCH_2OC_6H_5$ | H | $CH(CH_3)_2$ | " | " |
| " | $7-NHCOCH_2C_6H_5$ | " | " | " | " |

| | | | | | |
|---|---|---|---|---|---|
| " | 7—$NHCOCH_2Cl$ | " | " | " | " |
| 3—$CH_3$ | 7—$NHCOC_6H_5$ | " | " | " | " |
| " | 7—$NHCOC_6H_{11}$ | $CH_3$ | $CH_3$ | " | " |
| 3—$CH_3$—4—Cl | 7—$NHCONHC_2H_5$ | " | " | " | " |
| " | 7—$NHSO_2CH_3$ | " | " | " | " |
| " | 7—$NHCOCH_2CN$ | " | " | " | " |
| " | 7—$NHCOCH_2OH$ | " | " | " | " |
| 3—Cl—4—CN | 7—$NHCOOC_2H_5$ | " | " | —$CH_2CH_2CH_2$— | " |
| 3—Br—4—$COOCH_3$ | 7—$NHCOCH_2CH_2OCCH_3$ (with =O on C) | " | " | " | " |
| 3—$CH_3$—4—$COOCH_3$ | 8—$OC_4H_9$—n | H | $CH_3$ | —$CH_2CH_2$— | " |
| 3—$CH_3$—4—$CONH_2$ | 7—$CH_3$ | $CH_3$ | H | " | " |
| 3—$CH_3$—4—$CONHC_2H_4OH$ | 7—NHCO— 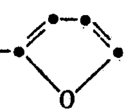 | " | $CH_3$ | " | " |
| 3—$CH_3$—4—$CONHC_4H_9$—n | 7—$OC_2H_5$ | " | " | " | " |
| 3—$CH_3$—4—$CONHC_3H_6OCH_3$ | 7—$OC_4H_9$—n | " | " | " | " |
| 3—$CH_3$—4—$COOC_2H_4OCH_3$ | 7—$CH_3$ | " | H | " | " |
| 3—$CH_3$—4—$SCH_2CH_2OH$ | " | " | " | " | " |
| 3—$CH_3$—4—$SCH_2CH_2OCOCH_3$ | " | " | " | —$CH_2CH_2CH_2CH_2$— | " |
| 3—$CH_3$—4—$SCH_3$ | " | " | " | —$CH_2CH_2$— | " |
| 3—$CH_3$—4—$SO_2CH_3$ | " | " | " | " | " |
| 3—$CH_3$—4—$SC_6H_5$ | " | " | " | " | " |

| | | | | | |
|---|---|---|---|---|---|
| 3-$CH_3$-4-$SC_6H_4$-p-$C(CH_3)_3$ | " | " | " | $-CH_2CH_2SO_2CH_2CH_2-$ | $K^+$ |
| 3-$CH_3$-4-$SC_6H_4$-p-Cl | " | " | " | $-CH_2CH_2OCH_2CH_2-$ | " |
| 3-$CH_3$-4-S- 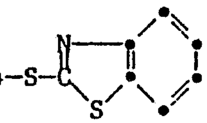 | " | " | " | $-CH_2CH_2SCH_2CH_2-$ | " |
| 3-$CH_3$-4-S- 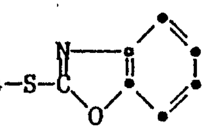 | " | " | " | $-CH_2CH(C_6H_5)-$ | " |
| 3-$CH_3$-4-S- 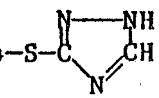 | " | " | " | $-CH_2CH(CH_3)-$ | " |
| 3-$CH_3$-4-$SC_6H_{11}$ | " | " | " | $-CH_2CH(OH)CH_2-$ | " |
| 3-$CH_3$-4-SCN | " | " | " | $-CH_2CH(Cl)CH_2-$ | " |
| 3-$CH_3$-4-$OC_6H_5$ | " | " | " | $-CH_2CH(CH_2OCH_2CH_3)-$ | " |
| 3-$CH_3$-4-$OC_2H_5$ | " | " | " | $-CH_2CH(CH_2OC_6H_5)-$ | " |
| 3-$CH_3$-4-$SCH_2CH{=}CH_2$ | " | " | " | $-CH_2CH_2N(SO_2CH_3)CH_2CH_2-$ | " |
| 3-$CH_3$-4-Br | " | " | " | $-CH_2CH_2CH_2NHSO_2CH_2CH_2-$ | " |
| " | " | " | " | $-CH_2CH_2SO_2NHCH_2CH_2-$ | " |
| " | " | " | " | $-CH_2CH_2NHCOCH_2-$ | " |
| " | " | " | " | $-CH_2CH_2NHCOOCH_2CH_2-$ | " |
| " | " | " | " | $-CH_2CH_2COOCH_2CH_2-$ | " |
| " | " | " | " | $-CH_2CH_2CONHC_2H_4-$ | " |

| | | | | | |
|---|---|---|---|---|---|
| " | " | " | " | $-CH_2CH_2NHCONHC_2H_4-$ | " |
| " | " | " | " | $-CH_2CH_2N(SO_2C_6H_5)CH_2CH_2-$ | " |
| " | " | " | " | $-CH_2CH_2N(COCH_3)CH_2CH_2-$ | " |
| " | " | " | " | $-CH_2CH_2SO_2N(C_6H_5)CH_2CH_2-$ | " |
| " | " | " | " | $-CH_2CH_2SO_2N(CH_3)CH_2CH_2-$ | " |

TABLE 9

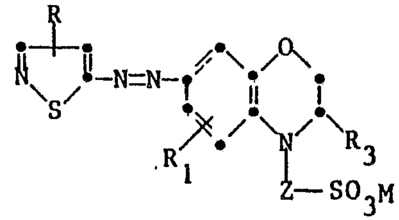

| R | $R_1$ | $R_3$ | Z | M |
|---|---|---|---|---|
| $3-CH_3-4-Cl$ | $6-CH_3$ | H | $-CH_2CH_2-$ | $K^+$ |
| " | H | H | " | " |
| " | " | $CH_3$ | " | " |
| " | $6-CH_3$ | " | " | " |
| $3-Cl-4-CN$ | " | " | $-CH_2CH_2CH_2CH_2-$ | " |
| " | $6-OCH_3$ | " | " | " |
| $3-CH_3$ | " | " | $-CH_2CH_2-$ | " |
| $3-CH_3-4-COOC_2H_5$ | $6-CH_3$ | " | $-CH_2CH_2OCH_2CH_2-$ | " |
| $3-CH_3-4-CONH_2$ | " | " | $-CH_2CH_2SO_2CH_2CH_2-$ | " |
| $3-CH_3-4-CONHC_2H_4OH$ | " | " | $-CH_2CH_2SCH_2CH_2-$ | " |
| $3-CH_3-4-CONHC_4H_9-n$ | " | " | $-CH_2CH(CH_3)$ | " |
| $3-CH_3-4-CONHC_3H_6OCH_3$ | " | " | $-CH_2CH(C_6H_5)-$ | " |
| $3-CH_3-4-CO_2CH_2CH_2OCH_3$ | $6-OC_2H_5$ | " | $-CH_2CH_2-$ | " |
| $3-CH_3-4-CONHCH_3$ | $6-NHCOCH_3$ | " | " | $Na^+$ |
| $3-CH_3-4-Br$ | $6-NHCOH$ | " | " | " |
| " | $6-NHCOCH_2CH_2OCH_3$ | " | " | " |

| | | | | |
|---|---|---|---|---|
| " | 6–$NHCOCH_2Cl$ | " | " | " |
| " | 6–$NHCOCH_2CN$ | " | " | " |
| " | 6–$NHCOCH_2CONH_2$ | " | " | " |
| " | 6–$NHCOCH_2OC_6H_5$ | " | " | " |
| 3–$CH_3$–4–$SC_2H_5$ | 6–$NHCOOC_2H_5$ | " | " | " |
| 3–$CH_3$–4–$SCH_2CH_2OH$ | 6–$NHCONHC_2H_5$ | " | " | " |
| 3–$CH_3$–4–$SCH_2CH{=}CH_2$ | 6–$NHCOC_6H_5$ | " | " | " |
| 3–$CH_3$–4–$SCH_2CH_2OCOCH_3$ | 6–$NHCOC_6H_{11}$ | " | " | " |
| 3–$CH_3$–4–S–$C_6H_5$ | 6–$NHSO_2CH_3$ | " | " | " |
| 3–$CH_3$–4–S–$C_6H_4$–p–$C(CH_3)_2$ | 6–$NHCOCH_2CH_2OCOCH_3$ | " | " | " |
| 3–$CH_3$–4–S–$C_6H_{11}$ | 6–NHCO– 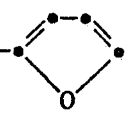 | " | " | " |
| 3–$CH_3$–4–$SO_2CH_2CH_2OH$ | 6–$NHCOCH_2CH_2CH_2OH$ | " | " | " |
| 3–$CH_3$–4–$SO_2CH_2CH_3$ | 6–$CH_3$ | " | –$CH_2CH_2CH_2$– | " |
| 3–$CH_3$–4–$OC_6H_5$ | " | " | –$CH_2CH_2$– | " |
| 3–$CH_3$–4–$OC_6H_4$–p–$OCH_3$ | " | " | " | " |
| 3–$CH_3$–4–S– 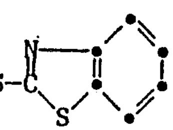 | " | " | " | " |
| 3–$CH_3$–4–S– 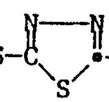 –$NHCOCH_3$ | " | " | " | " |

| | | | | |
|---|---|---|---|---|
| 3—$CH_3$—4—S— 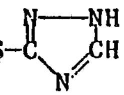 | " | " | " | " |
| 3—$CH_3$—4—$SCH_2CH(OH)CH_2OH$ | " | " | " | " |
| 3—$CH_3$—4—$SCH_2COOCH_3$ | " | " | " | " |
| 3—$CH_3$—4—$OC_2H_5$ | " | H | $-CH_2CH(CH_3)-$ | " |
| 3—$CH_3$—4—Br | " | $CH_3$ | $-CH_2CH_2N(SO_2CH_3)CH_2CH_2-$ | $K^+$ |
| " | " | " | $-CH_2CH_2SO_2NHCH_2CH_2-$ | " |
| " | " | " | $-CH_2CH_2SO_2N(CH_3)CH_2CH_2CH_2-$ | " |
| " | " | " | $-CH_2CH_2SO_2N(C_6H_5)CH_2CH_2-$ | " |
| " | " | " | $-CH_2CH_2SO_2N(C_6H_{11})CH_2CH_2-$ | " |
| " | " | " | $-CH_2CH_2CH_2CH_2N(SO_2CH_3)CH_2CH_2-$ | " |
| " | " | " | $-CH_2CH_2N(SO_2C_6H_4-p-CH_3)-CH_2CH_2-$ | " |
| " | " | " | $-CH_2CH_2N(SO_2C_6H_{11})CH_2CH_2-$ | " |
| " | " | " | $-CH_2CH(Cl)CH_2-$ | " |
| " | " | " | $-CH_2CH(OH)CH_2-$ | " |
| " | " | " | $-CH_2CH(CH_2OCH_3)-$ | " |
| " | " | " | $-CH_2CH(CH_2OC_6H_5)-$ | " |
| " | " | " | $-CH_2CH(OCOCH_3)CH_2-$ | " |
| " | " | " | $-CH_2CH_2NHCOCH_2-$ | " |
| " | " | " | $-CH_2CH_2CONHC_2H_4-$ | " |
| " | " | " | $-CH_2CH_2NHCOOCH_2CH_2-$ | " |

| | | | | |
|---|---|---|---|---|
| " | " | " | $-CH_2CH_2COOCH_2CH_2-$ | " |
| " | " | " | $-CH_2CH_2NHCONHCH_2CH_2-$ | " |
| " | " | " | $-CH_2CH_2N(COCH_3)CH_2CH_2-$ | " |
| " | " | " | $-CH_2CH_2N(COC_6H_5)CH_2CH_2-$ | " |

TABLE 10

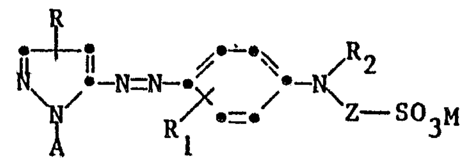

| A | R | $R_1$ | $R_2$ | Z | M |
|---|---|---|---|---|---|
| H | 4-CN | $2-CH_3$ | H | $-CH_2CH_2-$ | $K^+$ |
| " | " | 2-Cl | " | " | " |
| " | " | 2,5-di-Cl | " | " | " |
| " | " | $2,5-di-CH_3$ | " | " | " |
| " | " | $2,5-di-OCH_3$ | " | " | " |
| " | " | $3-OCH_3$ | $-C_2H_5$ | " | " |
| " | " | $2-OCH_3$, $5-NHCOCH_3$ | H | " | " |
| " | " | $2-CH_3$, 3-Cl | " | " | " |
| " | " | $2-OCH_3$, 5-Cl | " | " | " |
| " | " | $3-NHCOCH_3$ | $-C_2H_5$ | " | " |
| " | " | $3-NHCOC_2H_5$ | $-C_2H_4OCH_3$ | " | " |
| " | " | $3-NHCOCH_2OH$ | $-CH_2C_6H_5$ | " | " |
| " | " | $3-NHCOCH_2OCH_3$ | $-C_6H_{11}$ | " | " |

| | | | | | |
|---|---|---|---|---|---|
| " | " | 3-$NHCOC_6H_5$ | $-CH_2C_6H_{11}$ | " | " |
| " | " | 3-$NHCOOC_2H_5$ | $-CH_2CH_2OC_6H_5$ | " | " |
| " | " | 3-$NHCONHC_2H_5$ | $-CH_2CH_2OH$ | " | " |
| $C_6H_5$ | 3-$SC_2H_5$-4-CN | 3-$NHCOC_6H_{11}$ | $-CH_2CH(CH_3)_2$ | " | " |
| " | 3-$SC_2H_5$-4-$COOCH_3$ | 3-$NHCOCH_2CN$ | $-CH_2CH_2CH_2CH_3$ | " | " |
| " | 3-$SC_2H_5$-4-$CONH_2$ | 3-$NHCOCH_2OC_6H_5$ | $-CH_2CH_2OCOCH_3$ | " | " |
| " | 3-$SCH_3$-4-CN | 3-$NHCOCH_2C_6H_5$ | $-CH_2CH_2CONH_2$ | " | " |
| " | " | 3-$CH_3$ | $-CH_2CH_2NHCOCH_3$ | " | " |
| " | " | " | $-CH_2CH_2NHSO_2CH_3$ | " | " |
| " | " | " | $-CH_2CH_2SO_2NH_2$ | " | " |
| $SO_2C_6H_5$ | " | " | $-CH_2CH_2CH_2SO_2CH_3$ | " | " |
| $COCH_3$ | 4-CN | " | $-CH_2CH_2SCH_3$ | " | " |
| H | " | " | 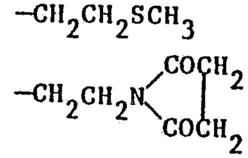 | $-CH_2CH_2CH_2-$ | $Na^+$ |
| " | " | " | 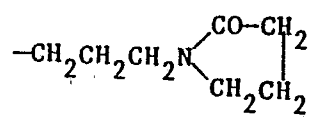 | " | " |
| " | " | 3-$OC_6H_5$ | 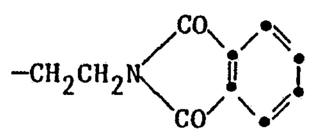 | " | $NH_4^+$ |
| $COOC_2H_5$ | " | 3-$CH_3$ | $-C_6H_5$ | $-CH_2CH_2-$ | $Na^+$ |
| H | " | " | 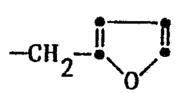 | $-CH_2CH(CH_2OC_6H_5)-$ | " |

| | | | | | |
|---|---|---|---|---|---|
| $CH_3$ | 4–CN | " | $-CH_2CH_2COOCH_3$ | $-CH_2CH(C_6H_5)-$ | " |
| " | $4-COOCH_3$ | " | $-CH_2CH_2CN$ | $-CH_2CH(CH_3)-$ | " |
| " | $4-CONH_2$ | " | $-C_2H_5$ | $-CH_2CH(OH)CH_2-$ | " |
| $-CH_2CH_3$ | 4–CN | $2-SCH_3$ | H | $-CH_2CH_2CH_2CH_2-$ | " |
| $C_6H_5$ | " | $3-CH_3$ | $-C_2H_4OC_2H_4OC_2H_5$ | $-CH_2CH(OCOCH_3)CH_2-$ | " |
| " | $4-COOCH_3$ | " | $-CH_2CH(OH)CH_2Cl$ | $-CH_2CH_2-$ | " |
| $C_6H_4-p-Cl$ | " | $2-OCH_3$, $5-CH_3$ | $C_2H_5$ | " | " |
| $C_6H_4-o-CH_3$ | " | " | H | $-CH_2CH_2OCH_2CH_2-$ | " |
| $C_6H_5$ | " | " | H | " | " |
| " | " | " | " | $-CH_2CH_2SO_2CH_2CH_2-$ | $K^+$ |
| H | $4-CONHC_2H_4OH$ | $3-CH_3$ | $C_2H_5$ | $-CH_2CH_2SCH_2CH_2-$ | " |
| " | $4-CONHC_4H_9-n$ | " | " | $-CH_2CH_2N(SO_2CH_3)CH_2CH_2-$ | " |
| " | $4-COOC_2H_4OCH_3$ | " | " | $-CH_2CH_2NHSO_2CH_2CH_2CH_2CH_2-$ | " |
| " | $4-CONHC_3H_6OCH_3$ | " | " | $-CH_2CH_2SO_2NHCH_2CH_2-$ | " |
| " | 4–CN | " | " | $-CH_2CH_2N(COCH_3)CH_2CH_2-$ | " |
| " | " | " | " | $-CH_2CH_2CONHC_2H_4-$ | " |
| " | " | " | " | $-CH_2CH_2NHCOCH_2-$ | " |
| " | " | " | " | $-CH_2CH_2N(SO_2C_6H_5)CH_2CH_2-$ | " |
| $SO_2CH_3$ | 4–CN | " | " | $-CH_2CH_2SO_2N(CH_3)CH_2CH_2-$ | " |
| $SO_2C_6H_5$ | " | " | " | $-CH_2CH_2SO_2N(C_6H_5)CH_2CH_2-$ | " |
| $SO_2CH_2CH_3$ | " | " | " | $-CH_2CH_2N(SO_2C_6H_{11})CH_2CH_2-$ | " |
| H | " | " | " | $-CH_2CH_2N(COCH_3)CH_2CH_2-$ | " |

| | | | | | |
|---|---|---|---|---|---|
| " | " | " | " | $-CH_2CH(CH_2OCH_3)-$ | " |
| " | " | " | " | $-CH_2CH(Cl)CH_2-$ | " |
| " | " | " | " | $-CH_2CH_2NHCONHC_2H_4-$ | " |
| " | " | " | " | $-CH_2CH_2NHCOOCH_2CH_2-$ | " |
| " | " | " | " | $-CH_2CH_2COOCH_2CH_2-$ | " |

TABLE 11

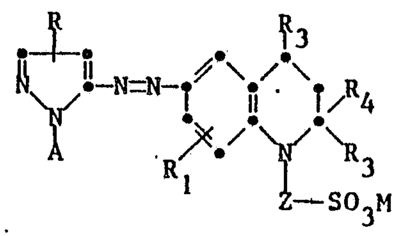

| A | R | $R_1$ | $R_3$ | $R_4$ | Z | M |
|---|---|---|---|---|---|---|
| H | 4-CN | H | $CH_3$ | $CH_3$ | $-CH_2CH_2-$ | $K^+$ |
| " | " | $7-CH_3$ | " | " | " | " |
| " | " | $7-OCH_3$ | " | " | " | " |
| " | " | 7-Cl | " | " | " | " |
| " | " | $5-CH_3$, $8-OCH_3$ | " | " | " | " |
| " | " | $5,8-di-OCH_3$ | " | " | " | " |
| " | " | $5,8-di-CH_3$ | " | " | " | " |
| " | " | 5-Cl, $8-OCH_3$ | " | " | " | " |
| " | " | $8-OCH_3$ | " | " | " | " |
| " | " | $8-OC_2H_5$ | H | H | " | " |
| " | " | $7-CH_3$ | " | " | " | " |
| $CH_3$ | " | $7-NHCOCH_3$ | $CH_3$ | $CH_3$ | " | $Na^+$ |
| " | " | 7-NHCOH | " | " | " | " |
| H | $4-COOCH_3$ | $7-NHCOCH_2OCH_3$ | " | " | " | " |
| H | $4-COOC_2H_5$ | $7-NHCOCH_2OC_6H_5$ | H | $CH(CH_3)_2$ | " | " |
| H | $4-COOC_2H_4OCH_3$ | $7-NHCOCH_2C_6H_5$ | " | " | " | " |

| | | | | | | |
|---|---|---|---|---|---|---|
| H | 4–$CONH_2$ | 7–$NHCOCH_2Cl$ | " | " | " | " |
| H | 4–$CONHC_2H_5$ | 7–$NHCOC_6H_5$ | " | " | " | " |
| " | " | 7–$NHCOC_6H_{11}$ | $CH_3$ | $CH_3$ | " | " |
| " | " | 7–$NHCONHC_2H_5$ | " | " | " | " |
| $C_6H_5$ | 4–CN | 7–$NHSO_2CH_3$ | " | " | " | " |
| " | " | 7–$NHCOCH_2CN$ | " | " | " | " |
| $C_6H_4$–p–Cl | " | 7–$NHCOCH_2OH$ | " | " | " | " |
| $C_6H_4$–p–$CH_3$ | " | 7–$NHCOOC_2H_5$ | " | " | –$CH_2CH_2CH_2$– | " |
| $SO_2CH_3$ | " | 7–$NHCOCH_2CH_2OCCH_3$ (C=O) | " | " | " | " |
| " | 4–$COOCH_3$ | 8–$OC_4H_9$–n | H | $CH_3$ | –$CH_2CH_2$– | " |
| $SO_2C_6H_5$ | " | 7–$CH_3$ | $CH_3$ | H | " | " |
| " | 4–CN | 7–NHCO– 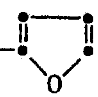 | " | $CH_3$ | " | " |
| " | 4–$CONHC_2H_4OH$ | 7–$OC_2H_5$ | " | " | " | " |
| " | 4–$COOCH(CH_3)_2$ | 7–$OC_4H_9$–n | " | " | " | " |
| $CH_3$ | 3–$SC_2H_5$–4–CN | 7–$CH_3$ | " | H | " | " |
| $C_6H_5$ | " | " | " | " | " | " |
| " | 3–$SC_2H_5$–4–$COOCH_3$ | " | " | " | –$CH_2CH_2CH_2CH_2$– | " |
| " | 3–$SCH_3$–4–$COOC_2H_5$ | " | " | " | –$CH_2CH_2$– | " |
| " | 3–$SO_2CH_3$–4–$COOCH_3$ | " | " | " | " | " |
| " | 3–$SC_6H_5$–4–$COOCH_3$ | " | " | " | " | " |

| | | | | | | |
|---|---|---|---|---|---|---|
| $COCH_3$ | 4–CN | " | " | " | $-CH_2CH_2SO_2CH_2CH_2-$ | $K^+$ |
| " | 4–$COOCH_3$ | " | " | " | $-CH_2CH_2OCH_2CH_2-$ | " |
| $CH_2CH_2OH$ | " | " | " | " | $-CH_2CH_2SCH_2CH_2-$ | " |
| H | 3–$CH_2CN$–4–CN | " | " | " | $-CH_2CH(C_6H_5)-$ | " |
| H | 3–$CH_2CONH_2$–4–CN | " | " | " | $-CH_2CH(CH_3)-$ | " |
| H | 4–CN | " | " | " | $-CH_2CH(OH)CH_2-$ | " |
| " | " | " | " | " | $-CH_2CH(Cl)CH_2-$ | " |
| " | " | " | " | " | $-CH_2CH(CH_2OCH_2CH_3)-$ | " |
| " | " | " | " | " | $-CH_2CH(CH_2OC_6H_5)-$ | " |
| " | " | " | " | " | $-CH_2CH_2N(SO_2CH_3)CH_2CH_2-$ | " |
| " | " | " | " | " | $-CH_2CH_2CH_2NHSO_2CH_2CH_2-$ | " |
| " | " | " | " | " | $-CH_2CH_2SO_2NHCH_2CH_2-$ | " |
| " | " | " | " | " | $-CH_2CH_2NHCOCH_3-$ | " |
| " | " | " | " | " | $-CH_2CH_2NHCOOCH_2CH_2-$ | " |
| " | " | " | " | " | $-CH_2CH_2COOCH_2CH_2-$ | " |
| " | " | " | " | " | $-CH_2CH_2CONHC_2H_4-$ | " |
| " | " | " | " | " | $-CH_2CH_2NHCONHC_2H_4-$ | " |
| " | " | " | " | " | $-CH_2CH_2N(SO_2C_6H_5)CH_2CH_2-$ | " |
| " | " | " | " | " | $-CH_2CH_2N(COCH_3)CH_2CH_2-$ | " |
| " | " | " | " | " | $-CH_2CH_2SO_2N(C_6H_5)CH_2CH_2-$ | " |
| " | " | " | " | " | $-CH_2CH_2SO_2N(CH_3)CH_2CH_2-$ | " |

TABLE 12

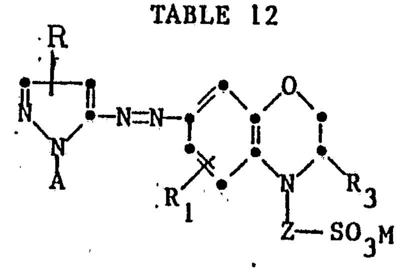

| A | R | $R_1$ | $R_3$ | Z | M |
|---|---|---|---|---|---|
| H | 4—CN | 6—$CH_3$ | H | —$CH_2CH_2$— | $K^+$ |
| " | " | H | H | " | " |
| $CH_3$ | " | " | $CH_3$ | " | " |
| " | 4—$COOCH_3$ | 6—$CH_3$ | " | " | " |
| " | 4—$COOC_2H_4OC_2H_5$ | " | " | —$CH_2CH_2CH_2CH_2$— | " |
| " | 4—$CONH_2$ | 6—$OCH_3$ | " | " | " |
| " | 4—$CONHC_2H_4OH$ | " | " | —$CH_2CH_2$— | " |
| " | 4—$CONHC_3H_6OCH_3$ | 6—$CH_3$ | " | —$CH_2CH_2OCH_2CH_2$— | " |
| " | 4—$CONHC_2H_4NHCOCH_3$ | " | " | —$CH_2CH_2SO_2CH_2CH_2$— | " |
| —$CH_2CH_3$ | 4—CN | " | " | —$CH_2CH_2SCH_2CH_2$— | " |
| $C_6H_5$ | " | " | " | —$CH_2CH(CH_3)$— | " |
| " | 4—$COOCH_2CH_3$ | " | " | —$CH_2CH(C_6H_5)$— | " |
| " | 4—$CONH_2$ | 6—$OC_2H_5$ | " | —$CH_2CH_2$— | " |
| $C_6H_4$—o—Cl | " | 6—$NHCOCH_3$ | " | " | $Na^+$ |

| | | | | | |
|---|---|---|---|---|---|
| H | " | 6–NHCOH | " | " | " |
| " | 4–$COOCH_3$ | 6–$NHCOCH_2CH_2OCH_3$ | " | " | " |
| " | " | 6–$NHCOCH_2Cl$ | " | " | " |
| " | 4–$CONHC_4H_9$–n | 6–$NHCOCH_2CN$ | " | " | " |
| " | " | 6–$NHCOCH_2CONH_2$ | " | " | " |
| " | " | 6–$NHCOCH_2OC_6H_5$ | " | " | " |
| $SO_2CH_3$ | 4–CN | 6–$NHCOOC_2H_5$ | " | " | " |
| " | 4–$COOCH_3$ | 6–$NHCONHC_2H_5$ | " | " | " |
| H | 3–$CH_2CN$–4–CN | 6–$NHCOC_6H_5$ | " | " | " |
| $C_6H_5$ | 3–$SCH_3$–4–CN | 6–$NHCOC_6H_{11}$ | " | " | " |
| " | 3–$SCH_2CH_3$–4–CN | 6–$NHSO_2CH_3$ | " | " | " |
| " | 3–$SCH_2CH_3$–4–$COOCH_3$ | 6–$NHCOCH_2CH_2OCOCH_3$ | " | " | " |
| " | 3–$SCH_3$–4–$CONHC_4H_9$–n | 6–NHCO– 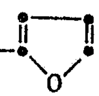 | " | " | " |
| $SO_2C_6H_5$ | 4–CN | 6–$NHCOCH_2CH_2CH_2OH$ | " | " | " |
| " | 4–$COOCH_3$ | 6–$CH_3$ | " | –$CH_2CH_2CH_2$ | " |
| $SO_2C_6H_4$–p–$CH_3$ | 4–CN | " | " | –$CH_2CH_2$– | " |
| $SO_2C_4H_9$–n | " | " | " | " | " |
| $COCH_3$ | " | " | " | " | " |
| $COOC_2H_5$ | " | " | " | " | " |
| $CH_2CH_2OH$ | " | " | " | " | " |
| $C_6H_4$–o–$CH_3$ | " | " | " | " | " |
| " | 4–$COOCH_3$ | " | " | " | " |

| | | | | | |
|---|---|---|---|---|---|
| " | 4–$COOCH(CH_3)_2$ | " | H | $-CH_2CH(CH_3)-$ | " |
| $SO_2C_6H_{11}$ | " | " | $CH_3$ | $-CH_2CH_2N(SO_2CH_3)CH_2CH_2-$ | $K^+$ |
| H | 4–CN | " | " | $-CH_2CH_2SO_2NHCH_2CH_2-$ | " |
| " | " | " | " | $-CH_2CH_2SO_2N(CH_3)CH_2CH_2CH_2-$ | " |
| " | " | " | " | $-CH_2CH_2SO_2N(C_6H_5)CH_2CH_2-$ | " |
| " | " | " | " | $-CH_2CH_2SO_2N(C_6H_{11})CH_2CH_2-$ | " |
| " | " | " | " | $-CH_2CH_2CH_2CH_2N(SO_2CH_3)CH_2CH_2-$ | " |
| " | " | " | " | $-CH_2CH_2N(SO_2C_6H_4-p-CH_3)-CH_2CH_2-$ | " |
| " | " | " | " | $-CH_2CH_2N(SO_2C_6H_{11})CH_2CH_2-$ | " |
| $C_6H_5$ | " | " | " | $-CH_2CH(Cl)CH_2-$ | " |
| " | " | " | " | $-CH_2CH(OH)CH_2-$ | " |
| " | " | " | " | $-CH_2CH(CH_2OCH_3)-$ | " |
| " | " | " | " | $-CH_2CH(CH_2OC_6H_5)-$ | " |
| " | " | " | " | $-CH_2CH(OCOCH_3)CH_2-$ | " |
| " | " | " | " | $-CH_2CH_2NHCOCH_2-$ | " |
| " | " | " | " | $-CH_2CH_2CONHC_2H_4-$ | " |
| " | " | " | " | $-CH_2CH_2NHCOOCH_2CH_2-$ | " |
| " | " | " | " | $-CH_2CH_2COOCH_2CH_2-$ | " |
| " | " | " | " | $-CH_2CH_2NHCONHCH_2CH_2-$ | " |
| " | " | " | " | $-CH_2CH_2N(COCH_3)CH_2CH_2-$ | " |
| " | " | " | " | $-CH_2CH_2N(COC_6H_5)CH_2CH_2-$ | " |

TABLE 13

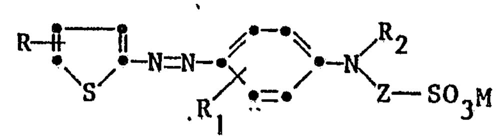

| R | $R_1$ | $R_2$ | Z | M |
|---|---|---|---|---|
| 3,5-di-CN-4-$CH_3$ | 2-$CH_3$ | H | $-CH_2CH_2-$ | $K^+$ |
| " | 2-Cl | " | " | " |
| " | 2,5-di-Cl | " | " | " |
| " | 2,5-di-$CH_3$ | " | " | " |
| 3-CN-5-$C_6H_5$ | 2,5-di-$OCH_3$ | " | " | " |
| 3-$COOCH_3$-5-$C_6H_5$ | 3-$OCH_3$ | $-C_2H_5$ | " | " |
| 3-$CONH_2$-5-$C_6H_5$ | 2-$OCH_3$, 5-$NHCOCH_3$ | H | " | " |
| 3-$CONHC_2H_5$-5-$C_6H_5$ | 2-$CH_3$, 3-Cl | " | " | " |
| 3-$COOCH_3$ | 2-$OCH_3$, 5-Cl | " | " | " |
| 3-CN | 3-$NHCOCH_3$ | $-C_2H_5$ | " | " |
| 3-CN-4-$CH_3$-5-$COOC_2H_5$ | 3-$NHCOC_2H_5$ | $-C_2H_4OCH_3$ | " | " |
| " | 3-$NHCOCH_2OH$ | $-CH_2C_6H_5$ | " | " |
| " | 3-$NHCOCH_2OCH_3$ | $-C_6H_{11}$ | " | " |
| " | 3-$NHCOC_6H_5$ | $-CH_2C_6H_{11}$ | " | " |
| 3-CN-4-$CH_3$-5-$COCH_3$ | 3-$NHCOOC_2H_5$ | $-CH_2CH_2OC_6H_5$ | " | " |
| 3-$COOCH_3$-4-$CH_3$-5-CN | 3-$NHCONHC_2H_5$ | $-CH_2CH_2OH$ | " | " |

| | | | | |
|---|---|---|---|---|
| 3-$COOCH_3$-4-$CH_3$-5-$COC_6H_5$ | 3-$NHCOC_6H_{11}$ | -$CH_2CN(CH_3)_2$ | " | " |
| 3-$COOCH_3$-5-$COC_6H_5$ | 3-$NHCOCH_2CN$ | -$CH_2CH_2CH_2CH_3$ | " | " |
| 3-$COOCH_3$-5-$COCH(CH_3)_2$ | 3-$NHCOCH_2OC_6H_5$ | -$CH_2CH_2OCOCH_3$ | " | " |
| " | 3-$NHCOCH_2C_6H_5$ | -$CH_2CH_2CONH_2$ | " | " |
| " | 3-$CH_3$ | -$CH_2CH_2NHCOCH_3$ | " | " |
| " | " | -$CH_2CH_2NHSO_2CH_3$ | " | " |
| " | " | -$CH_2CH_2SO_2NH_2$ | " | " |
| " | " | -$CH_2CH_2CH_2SO_2CH_3$ | " | " |
| 3-$SO_2C_6H_5$-5-$COCH_3$ | " | -$CH_2CH_2SCH_3$ | " | " |
| 3-$SO_2CH_3$-5-CN | " | 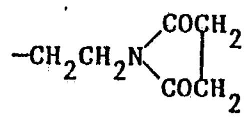 | -$CH_2CH_2CH_2$- | $Na^+$ |
| 3-$SO_2C_6H_5$-5-Br | " | 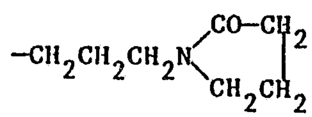 | " | " |
| 3,5-di-$SO_2CH_3$ | 3-$OC_6H_5$ | 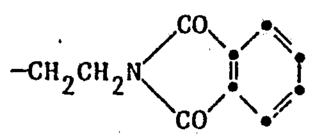 | " | $NH_4^+$ |
| 3,5-di-$SO_2NH_2$ | 3-$CH_3$ | -$C_6H_5$ | -$CH_2CH_2$- | $Na^+$ |
| 3,5-di-$SO_2N(C_2H_5)_2$ | " | 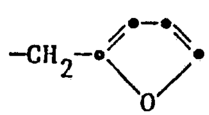 | -$CH_2CH(CH_2OC_6H_5)$- | " |

| | | | | |
|---|---|---|---|---|
| 3—CN—5—$COCH_3$ | " | —$CH_2CH_2COOCH_3$ | —$CH_2CH(C_6H_5)$— | " |
| 3—CN—5—$COCH(CH_3)_2$ | " | —$CH_2CH_2CN$ | —$CH_2CH(CH_3)$— | " |
| 3—CN—S—$COOC_2H_5$ | " | —$C_2H_5$ | —$CH_2CH(OH)CH_2$— | " |
| 3—$CONH_2$—5—$COOC_2H_5$ | 2—$SCH_3$ | H | —$CH_2CH_2CH_2CH_2$— | " |
| 3—$CONH_2$—5—$COCH(CH_3)_2$ | 3—$CH_3$ | —$C_2H_4OC_2H_4OC_2H_5$ | —$CH_2CH(OCOCH_3)CH_2$— | " |
| 3—$CONHC_2H_4OH$—5—$COCH(CH_3)_2$ | " | —$CH_2CH(OH)CH_2Cl$ | —$CH_2CH_2$— | " |
| " | 2—$OCH_3$, 5—$CH_3$ | —$C_2H_5$ | " | " |
| " | " | H | —$CH_2CH_2OCH_2CH_2$— | " |
| " | " | H | " | " |
| " | " | " | —$CH_2CH_2SO_2CH_2CH_2$— | $K^+$ |
| 3—$CONHC_3H_6OCH_3$—5—$COCH(CH_3)_2$ | 3—$CH_3$ | $C_2H_5$ | —$CH_2CH_2SCH_2CH_2$— | " |
| 3—$CONHC_4H_9$—n—5—$COCH(CH_3)_2$ | " | " | —$CH_2CH_2N(SO_2CH_3)CH_2CH_2$— | " |
| 3—$CONHC_2H_4OH$—5—$COCH(CH_3)_2$ | " | " | —$CH_2CH_2NHSO_2CH_2CH_2CH_2CH_2$— | " |
| 3—$COOCH_3$—5—$SO_2CH_3$ | " | " | —$CH_2CH_2SO_2NHCH_2CH_2$— | " |
| 3—$CONHC_2H_5$—5—$SO_2CH_3$ | " | " | —$CH_2CH_2N(COCH_3)CH_2CH_2$— | " |
| 3—$CONH_2$—5—$SO_2CH_3$ | " | " | —$CH_2CH_2CONHC_2H_4$— | " |
| 3—$CONH_2$—5—$SO_2C_4H_9$—n | " | " | —$CH_2CH_2NHCOCH_2$— | " |
| 3—$COOCH_3$—4—$CH_3$—5—SCN | " | " | —$CH_2CH_2N(SO_2C_6H_5)CH_2CH_2$— | " |
| 3—CHO—4—$CH_3$ | " | " | —$CH_2CH_2SO_2N(CH_3)CH_2CH_2$— | " |
| 3—$CONH_2$—5—$C_6H_4$—p—$CH_3$ | " | " | —$CH_2CH_2SO_2N(C_6H_5)CH_2CH_2$— | " |

| | | | | |
|---|---|---|---|---|
| 3-CN-5-$COOC_2H_5$ | " | " | $-CH_2CH_2N(SO_2C_6H_{11})CH_2CH_2-$ | " |
| 3-$COOCH_3$-5-$COCH(CH_3)_2$ | " | " | $-CH_2CH_2N(COCH_3)CH_2CH_2-$ | " |
| " | " | " | $-CH_2CH(CH_2OCH_3)-$ | " |
| " | " | " | $-CH_2CH(Cl)CH_2-$ | " |
| " | " | " | $-CH_2CH_2NHCONHC_2H_4-$ | " |
| " | " | " | $-CH_2CH_2NHCOOCH_2CH_2-$ | " |
| " | " | " | $-CH_2CH_2COOCH_2CH_2-$ | " |

TABLE 14

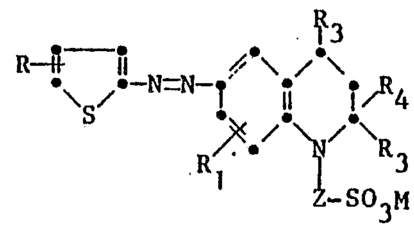

| R | $R_1$ | $R_3$ | $R_4$ | Z | M |
|---|---|---|---|---|---|
| 3-$CONHC_2H_5$-5-$COCH(CH_3)_2$ | H | $CH_3$ | $CH_3$ | $-CH_2CH_2-$ | $K^+$ |
| " | 7-$CH_3$ | " | " | " | " |
| 3-$CONH_2$-5-$COCH(CH_3)_2$ | 7-$OCH_3$ | " | " | " | " |
| " | 7-Cl | " | " | " | " |
| " | 5-$CH_3$, 8-$OCH_3$ | " | " | " | " |
| " | 5,8-di-$OCH_3$ | " | " | " | " |
| " | 5,8-di-$CH_3$ | " | " | " | " |
| " | 5-Cl, 8-$OCH_3$ | " | " | " | " |
| " | 8-$OCH_3$ | " | " | " | " |
| " | 8-$OC_2H_5$ | H | H | " | " |
| " | 7-$CH_3$ | " | " | " | " |
| 3-$COOCH_3$-5-$COCH(CH_3)_2$ | 7-$NHCOCH_3$ | $CH_3$ | $CH_3$ | " | $Na^+$ |
| " | 7-NHCOH | " | " | " | " |
| " | 7-$NHCOCH_2OCH_3$ | " | " | " | " |
| " | 7-$NHCOCH_2OC_6H_5$ | H | $CH(CH_3)_2$ | " | " |
| " | 7-$NHCOCH_2C_6H_5$ | " | " | " | " |

| | | | | | |
|---|---|---|---|---|---|
| 3,5-di-CN-4-$CH_3$ | 7-$NHCOCH_2Cl$ | " | " | " | " |
| " | 7-$NHCOC_6H_5$ | " | " | " | " |
| " | 7-$NHCOC_6H_{11}$ | $CH_3$ | $CH_3$ | " | " |
| " | 7-$NHCONHC_2H_5$ | " | " | " | " |
| " | 7-$NHSO_2CH_3$ | " | " | " | " |
| 3-$CONH_2$-5-$C_6H_5$ | 7-$NHCOCH_2CN$ | " | " | " | " |
| " | 7-$NHCOCH_2OH$ | " | " | " | " |
| 3-$COOCH_3$-5-$C_6H_5$ | 7-$NHCOOC_2H_5$ | " | " | $-CH_2CH_2CH_2-$ | " |
| 3-$COOCH_3$-5-$COCH_3$ | 7-$NHCOCH_2CH_2OC(=O)CH_3$ | " | " | " | " |
| 3-CN-5-$COOC_2H_5$ | 8-$OC_4H_9$-n | H | $CH_3$ | $-CH_2CH_2-$ | " |
| 3-CN-4-$CH_3$-5-$COOC_2H_5$ | 7-$CH_3$ | $CH_3$ | H | " | " |
| 3-CN-4-$CH_3$-5-$COCH_3$ | 7-NHCO— 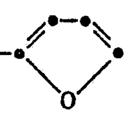 | " | $CH_3$ | " | " |
| 3-$COOCH_3$-4-$CH_3$-5-CN | 7-$OC_2H_5$ | " | " | " | " |
| 3-CN-4-$CH_3$-5-$CO_2CH_2CH_2OC_2H_5$ | 7-$OC_4H_9$-n | " | " | " | " |
| 3-$SO_2C_6H_5$-5-$COCH_3$ | 7-$CH_3$ | " | H | " | " |
| 3-$SO_2C_6H_4$-p-Cl-5-$COCH_3$ | " | " | " | " | " |
| 3-$SO_2CH_3$-5-CN | " | " | " | $-CH_2CH_2CH_2CH_2-$ | " |
| 3-$COOCH_3$-5-Br | " | " | " | $-CH_2CH_2-$ | " |
| 3-$COOCH_3$-5-SCN | " | " | " | " | " |
| 3-$CONHC_2H_4OH$-5-$COCH(CH_3)_2$ | " | " | " | " | " |

| | | | | | |
|---|---|---|---|---|---|
| 3-$CONHC_3H_6OCH_3$-5-$COCH(CH_3)_2$ | " | " | " | $-CH_2CH_2SO_2CH_2CH_2-$ | $K^+$ |
| 3-CN-5-$SO_2CH_3$ | " | " | " | $-CH_2CH_2OCH_2CH_2-$ | " |
| 3,5-di-$SO_2NH_2$ | " | " | " | $-CH_2CH_2SCH_2CH_2-$ | " |
| 3,5-di-$SO_2NHC_2H_5$ | " | " | " | $-CH_2CH(C_6H_5)-$ | " |
| 3-$COOCH_3$-5-$COC_6H_5$ | " | " | " | $-CH_2CH(CH_3)-$ | " |
| 3-$CONHC_4H_9$-n-5-$COC_6H_5$ | " | " | " | $-CH_2CH(OH)CH_2-$ | " |
| 3-$COOCH_3$-5-$SO_2CH_3$ | " | " | " | $-CH_2CH(Cl)CH_2-$ | " |
| 3-$CONHC_2H_4OH$-5-$SO_2CH_3$ | " | " | " | $-CH_2CH(CH_2OCH_2CH_3)-$ | " |
| 3-CHO | " | " | " | $-CH_2CH(CH_2OC_6H_5)-$ | " |
| 3-$SO_2C_6H_5$ | " | " | " | $-CH_2CH_2N(SO_2CH_3)CH_2CH_2-$ | " |
| 3-$CONHC_2H_5$-5-$COCH(CH_3)_2$ | " | " | " | $-CH_2CH_2CH_2NHSO_2CH_2CH_2-$ | " |
| " | " | " | " | $-CH_2CH_2SO_2NHCH_2CH_2-$ | " |
| " | " | " | " | $-CH_2CH_2NHCOCH_2-$ | " |
| " | " | " | " | $-CH_2CH_2NHCOOCH_2CH_2-$ | " |
| " | " | " | " | $-CH_2CH_2COOCH_2CH_2-$ | " |
| " | " | " | " | $-CH_2CH_2CONHC_2H_4-$ | " |
| " | " | " | " | $-CH_2CH_2NHCONHC_2H_4-$ | " |
| " | " | " | " | $-CH_2CH_2N(SO_2C_6H_5)CH_2CH_2-$ | " |
| " | " | " | " | $-CH_2CH_2N(COCH_3)CH_2CH_2-$ | " |
| 3-$COOCH_3$-4-$CH_3$-5-$CONH_2$ | " | " | " | $-CH_2CH_2SO_2N(C_6H_5)CH_2CH_2-$ | " |
| " | " | " | " | $-CH_2CH_2SO_2N(CH_3)CH_2CH_2-$ | " |

TABLE 15

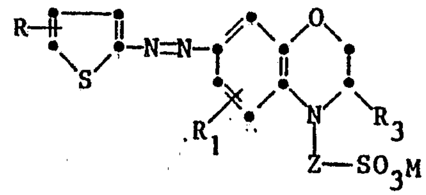

| R | $R_1$ | $R_3$ | Z | M |
|---|---|---|---|---|
| $3-COOCH_3-5-COCH(CH_3)_2$ | $6-CH_3$ | H | $-CH_2CH_2-$ | $K^+$ |
| $3-CONH_2-5-COCH(CH_3)_2$ | H | H | " | " |
| $3-CN-5-COCH(CH_3)_2$ | " | $CH_3$ | " | " |
| " | $6-CH_3$ | " | " | " |
| $3-CONH_2-5-C_6H_5$ | " | " | $-CH_2CH_2CH_2CH_2-$ | " |
| " | $6-OCH_3$ | " | " | " |
| " | " | " | $-CH_2CH_2-$ | " |
| $3-CN-5-C_6H_5$ | $6-CH_3$ | " | $-CH_2CH_2OCH_2CH_2-$ | " |
| $3-CONHC_2H_4OH-5-C_6H_5$ | " | " | $-CH_2CH_2SO_2CH_2CH_2-$ | " |
| $3-CONHC_2H_5-5-COC_6H_5$ | " | " | $-CH_2CH_2SCH_2CH_2-$ | " |
| $3-CONHCH_3-5-COC_6H_5$ | " | " | $-CH_2CH(CH_3)$ | " |
| $3-CN-4-CH_3-5-COOC_2H_5$ | " | " | $-CH_2CH(C_6H_5)-$ | " |
| $3-CN-4-CH_3-5-COOC_2H_4OCH_3$ | $6-OC_2H_5$ | " | $-CH_2CH_2-$ | " |
| $3-CHO-4,5-di-CH_3$ | $6-NHCOCH_3$ | " | " | $Na^+$ |
| $3-CN-4-CH_3-5-SCH_3$ | $6-NHCOH$ | " | " | " |
| $3-COOCH_3-4-CH_3-5-CONH_2$ | $6-NHCOCH_2CH_2OCH_3$ | " | " | " |

| | | | | |
|---|---|---|---|---|
| $3-CONH_2-4-CH_3-5-CN$ | $6-NHCOCH_2Cl$ | " | " | " |
| $3,5-di-CN-4-CH_3$ | $6-NHCOCH_2CN$ | " | " | " |
| " | $6-NHCOCH_2CONH_2$ | " | " | " |
| " | $6-NHCOCH_2OC_6H_5$ | " | " | " |
| " | $6-NHCOOC_2H_5$ | " | " | " |
| $3-CONH_2-4-CH_3-5-COOCH_3$ | $6-NHCONHC_2H_5$ | " | " | " |
| $3-SO_2CH_3-5-COCH_3$ | $6-NHCOC_6H_5$ | " | " | " |
| $3-SO_2C_6H_5-5-COCH_3$ | $6-NHCOC_6H_{11}$ | " | " | " |
| $3-SO_2C_6H_4-p-Cl-5-COCH_3$ | $6-NHSO_2CH_3$ | " | " | " |
| $3-SO_2CH_3-5-Br$ | $6-NHCOCH_2CH_2OCOCH_3$ | " | " | " |
| $3,5-di-SO_2CH_3$ | 6-NHCO- 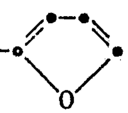 | " | " | " |
| $3,5-di-SO_2NH_2$ | $6-NHCOCH_2CH_2CH_2OH$ | " | " | " |
| $3,5-di-SO_2NHC_2H_5$ | $6-CH_3$ | " | $-CH_2CH_2CH_2-$ | " |
| $3-CONHC_2H_4OH-5-COCH(CH_3)_2$ | " | " | $-CH_2CH_2-$ | " |
| $3-CONHC_3H_6OCH_3-5-COCH(CH_3)_2$ | " | " | " | " |
| $3-CONHC_2H_4NHCOCH_3$ | " | " | " | " |
| $3-CONHC_4H_9-n-5-C_6H_5$ | " | " | " | " |
| $3-CN-5-COOC_2H_5$ | " | " | " | " |
| $3-CN-4-CH_3-5-COOCH(CH_3)_2$ | " | " | " | " |

| | | | | |
|---|---|---|---|---|
| 3–CN–4–$CH_3$–5–$CONHC_2H_5$ | " | " | " | " |
| 3–CN–4–$CH_3$–5–$CONHC_6H_5$ | " | H | $-CH_2CH(CH_3)-$ | " |
| 3–$CONH_2$–5–$SO_2CH_3$ | " | $CH_3$ | $-CH_2CH_2N(SO_2CH_3)CH_2CH_2-$ | $K^+$ |
| 3–$CONH_2$–5–$COCH(CH_3)_2$ | " | " | $-CH_2CH_2SO_2NHCH_2CH_2-$ | " |
| " | " | " | $-CH_2CH_2SO_2N(CH_3)CH_2CH_2CH_2-$ | " |
| " | " | " | $-CH_2CH_2SO_2N(C_6H_5)CH_2CH_2-$ | " |
| " | " | " | $-CH_2CH_2SO_2N(C_6H_{11})CH_2CH_2-$ | " |
| " | " | " | $-CH_2CH_2CH_2CH_2N(SO_2CH_3)CH_2CH_2-$ | " |
| " | " | " | $-CH_2CH_2N(SO_2C_6H_4-p-CH_3)-CH_2CH_2-$ | " |
| 3–$CONHC_2H_5$–5–$COCH(CH_3)_2$ | " | " | $-CH_2CH_2N(SO_2C_6H_{11})CH_2CH_2-$ | " |
| " | " | " | $-CH_2CH(Cl)CH_2-$ | " |
| " | " | " | $-CH_2CH(OH)CH_2-$ | " |
| " | " | " | $-CH_2CH(CH_2OCH_3)-$ | " |
| " | " | " | $-CH_2CH(CH_2OC_6H_5)-$ | " |
| " | " | " | $-CH_2CH(OCOCH_3)CH_2-$ | " |
| " | " | " | $-CH_2CH_2NHCOCH_2-$ | " |
| " | " | " | $-CH_2CH_2CONHC_2H_4-$ | " |
| " | " | " | $-CH_2CH_2NHCOOCH_2CH_2-$ | " |
| " | " | " | $-CH_2CH_2COOCH_2CH_2-$ | " |
| " | " | " | $-CH_2CH_2NHCONHCH_2CH_2-$ | " |
| " | " | " | $-CH_2CH_2N(COCH_3)CH_2CH_2-$ | " |
| " | " | " | $-CH_2CH_2N(COC_6H_5)CH_2CH_2-$ | " |

Examples 11-20 - Diazotization of 5-Amino-3-ethylthio-1,2,4-thiadiazole

5-Amino-3-ethylthio-1,2,4-thiadiazole (8.05 g, 0.05 m) was diazotized exactly as described in Examples 1-10 and 0.005 m aliquots were coupled to 0.005 m portions of the couplers of Examples 1-10 in the manner previously illustrated.

Examples 21-30 - Diazotization of 5-Amino-3-methyl-4-cyano isothiazole

To 25 ml of concentrated sulphuric acid was added 3.6 g of sodium nitrite, allowing the temperature to rise. The solution was cooled, and 50 ml of 1:5 acid was added below 10°C. Stirring was continued and 5-amino-3-methyl-4-cyanoisothiazole (6.95 g, 0.05 m) was added below 5°C., followed by an additional 50 ml of 1:5 acid. After being stirred at 0-5°C. for two hours, a 0.005 m aliquot of the diazonium salt was coupled to 0.005 m of each of the couplers of Examples 1-10 as previously described, to produce rubine to violet dyes for polyamides.

Examples 41-50 - Diazotization of 5-Amino-4-carbomethoxy-pyrazole

Nitrosyl sulphuric acid was prepared by adding 3.6 g of sodium nitrite to 25 ml of concentrated sulphuric acid. The solution was cooled and 100 ml of 1:5 acid was added below 20°C. After further cooling, 5-amino-4-carbomethoxypyrazole (7.05 g, 0.05 m) was added to 0-5°C. and stirring continued for two hours. A 0.005 m aliquot of the diazonium solution was coupled to 0.005 m of each of the couplers of Examples 1-10 in the manner previously

described, to produce red dyes for polyamides.

Examples 51-60 - Diazotization of 2-Amino-3-carbomethoxy-5-isobutyrylthiophene

To 150 g of 60% aqueous acetic acid was added 2-amino-3-carbomethoxy-5-isobutyrylthiophene (11.35 g, 0.05 m) at room temperature. Concentrated sulphuric acid (10 g) was added, and the mixture cooled to 0°C. A solution of sodium nitrite (3.6 g) in concentrated sulphuric acid (25 ml) was added below 10°C. and stirring continued for one hour at 0-5°C. A 0.005 m aliquot of this diazonium salt was coupled to 0.005 m of each of the couplers of Examples 1-10 as previously described to produce violet to reddish-blue dyes for polyamides.

CLAIMS

1. A compound characterised in that it has the formula D-N=N-Coupler, wherein D is selected from the heterocyclic groups of the formulae

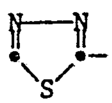 , 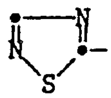 , 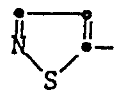 , 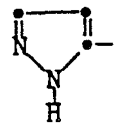 and 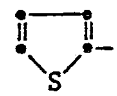

I II III IV V

wherein ring I may bear a substituent selected from alkyl, substituted alkyl, alkoxy, halogen, alkylsulphonyl, $-SO_2O$-aryl, $-SO_2NH_2$, $-SO_2NH$-alkyl, $-SO_2N$-(dialkyl), arylsulphonyl, $-SO_2NH$-substituted alkyl, $-SO_2NH$-aryl, acylamido, aryl, arylthio, alkenylthio, cyclohexylthio, thiocyano, cyclohexylsulphonyl, alkylthio, substituted alkylthio and cyclohexyl;

ring II may bear a substituent selected from alkyl, substituted alkyl, aryl, alkylthio, cyclohexylthio, substituted alkylthio and alkylsulphonyl;

ring III may bear one or two substituents selected from alkyl, substituted alkyl, halogen, cyano, carbamoyl, -CONH-alkyl, -CONH-substituted alkyl, alkoxycarbonyl, alkylthio, substituted alkylthio, alkenylthio, arylthio, cyclohexylthio, alkylsulphonyl, S-heterocycle, aryloxy, -SCN, and alkoxy;

ring IV may bear one or more substituents selected from alkyl, substituted alkyl, alkoxycarbonyl, alkylthio, aryl, $-SO_2$-aryl, $-SO_2$-cycloalkyl, cyano,

carbamoyl, alkyl carbamoyl, alkylcarbonyl, substituted alkyl carbamoyl, and alkylsulphonyl; and

ring V may be substituted with one to three substituents selected from alkyl, substituted alkyl, cyano, alkoxycarbonyl, acyl, aroyl, alkylsulphonyl, arylsulphonyl, carbamoyl, alkyl carbamoyl, substituted alkyl carbamoyl, aryl, halogen, sulphamoyl, -SCN, alkylthio, alkylsulphamoyl, substituted alkyl sulphamoyl and formyl;

and wherein the various alkyl groups, including those present in alkoxy groups, may bear one to three substituents selected from hydroxy, alkoxy, aryl, aryloxy, cyclohexyl, alkylcyclohexyl, acyloxy, alkoxy carbonyl, acylamido, alkylsulphonamido, succinimido, glutarimido, phthalimido, 2-pyrrolidono, cyano, carbamoyl, -CONH(alkyl), alkoxyalkoxy, alkylthio, halogen, arylthio, alkylsulphonyl and arylsulphonyl;

and wherein the various aryl groups may be substituted with one to three substituents selected from alkyl, alkoxy, cyano, halogen, alkoxy carbonyl, alkylsulphonyl, $-CONH_2$, and alkylthio; and

the Coupler is derived from those of the formulae

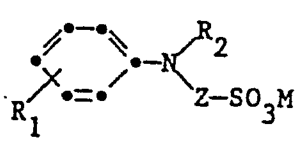 , 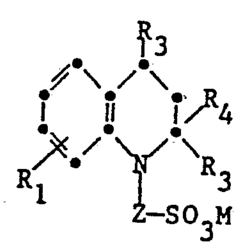 and 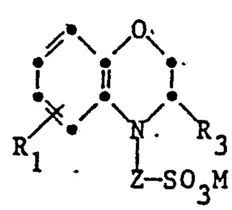

wherein

$R_1$ is hydrogen or one or two substituents selected from alkyl, halogen, alkylthio, alkoxy, aryloxy, and $-NHCO-R_5$ or $-NHSO_2-R_5$ wherein $R_5$ is selected from alkyl which may be substituted with hydroxy, alkoxy, cyano, aryloxy, aryl, halogen, cycloalkyl, alkyl carbonyloxy, or carbamoyl; hydrogen; aryl; alkoxy, cycloalkyl; alkylamino; 2-furyl; $R_2$ is selected from hydrogen, aryl, cycloalkyl, and alkyl which may be substituted with alkoxy, alkoxyalkoxy, hydroxy, aryloxy, aryl, cycloalkyl, alkylcycloalkyl, furyl, acylamido, $NHCOR_5$, $NHSO_2R_5$, aryloxy, carbamoyl, alkoxy carbamoyl, alkyl substituted carbamoyl, cyano, alkanoyloxy, halogen, alkoxycarbonyl, succinimido, glutarimido, phthalimido, 2-pyrrolidono, sulphamoyl, alkyl substituted sulphamoyl, alkylsulphonamido, $-NHSO_2$-aryl, -NHCOO-alkyl, -NHCONH-alkyl, alkylsulphonyl, arylsulphonyl, alkylthio, arylthio or $-SO_3M$; M is $Na^+$, $K^+$, $NH_4^+$, or $H^+$; $R_3$ and $R_4$ are each selected from hydrogen or alkyl; Z is selected from alkylene, alkylene substituted with aryl, aryloxy, alkoxy, -OCO(alkyl), halogen, hydroxy or $-SO_3M$, and $-CH_2(CH_2)_m-X-CH_2(CH_2)_p-$, where m is 1, 2, or 3, p is 0, 1, 2 or 3, and X is -O-, -S-, $-SO_2-$, -COO-, $-NHSO_2-$, $-SO_2NH-$, $-SO_2\overset{|}{N}$-alkyl, $-\overset{|}{N}-SO_2$-alkyl, $-SO_2-\overset{alkyl}{\overset{|}{N}}-$,

$-\overset{alkyl}{\overset{|}{N}}-SO_2-$, $-\overset{|}{N}-SO_2$-aryl, $-\underset{aryl}{\overset{|}{N}}-SO_2$-cyclohexyl, $-SO_2-\overset{|}{N}$-cyclohexyl,

$-\overset{|}{N}$-CO-aryl, $-CO-\overset{|}{N}$-aryl, $-\overset{|}{N}-CO-$, $-\overset{|}{N}CO$-alkyl, -NHCO-, -CONH-,

-NHCOO-, $-\overset{alkyl}{\overset{|}{N}}-CO-$, $-CO-\overset{alkyl}{\overset{|}{N}}-$, $-\overset{aryl}{\overset{|}{N}}-SO_2-$, or $-NH\overset{O}{\overset{\|}{C}}NH-$; the various aryl groups in the Coupler may be substituted with alkyl, alkoxy or halogen; the alkyl or alkylene moieties of all the above groups being straight or branched chains of 1 to 6 carbon atoms, and the aryl moieties having 6 to 12 carbon atoms.

2. A dye as claimed in Claim 1, where $R_1$ is selected from hydrogen, alkyl and alkoxy; $R_2$ is selected from hydrogen and alkyl; and Z is alkylene.

3. A dye as claimed in Claim 1, having the formula

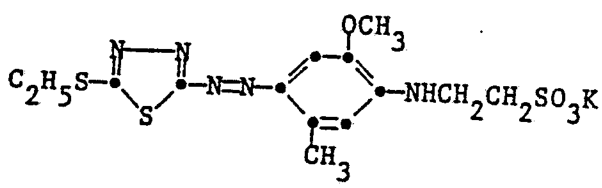

4. A dye as claimed in Claim 1, having the formula

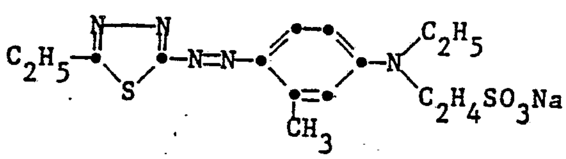

5. A dye as claimed in Claim 1, having the formula

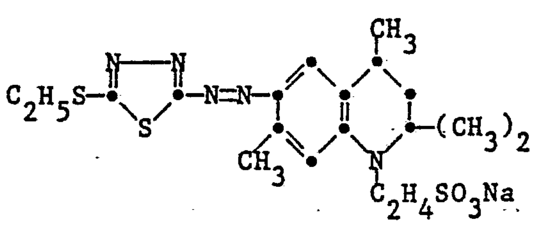

6. A dye as claimed in Claim 1, having the formula

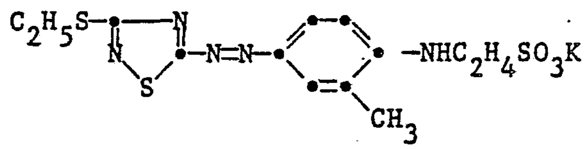

7. A dye as claimed in Claim 1, having the formula

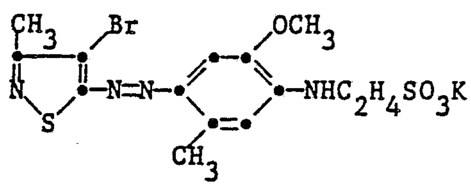

8. A dye as claimed in Claim 1, having the formula

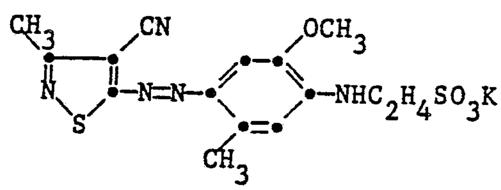

9. A dye as claimed in Claim 1, having the formula

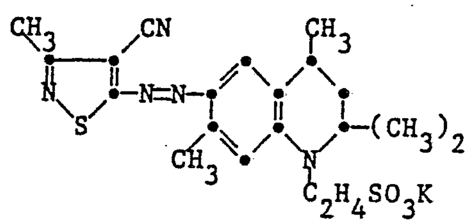

10. A dye as claimed in Claim 1, having the formula

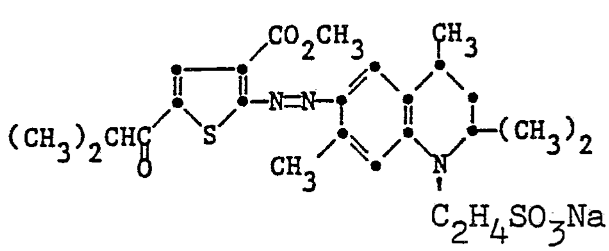

11. A dye as claimed in Claim 1, having the formula

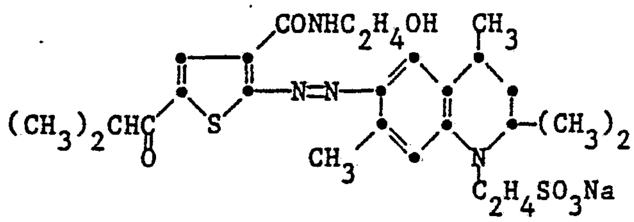

12. A dye as claimed in Claim 1, having the formula

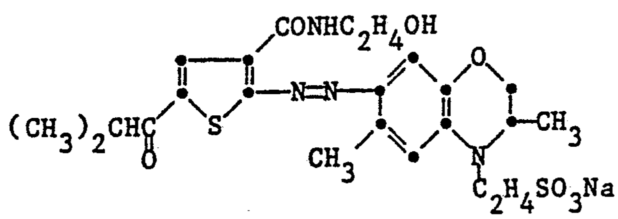

13. Dyes as claimed in Claim 1 and substantially as hereinbefore described.

14. The method of dyeing polyamide fibres with a dye as claimed in any one of Claims 1 to 12.

15. Polyamide fibres dyed by the method of Claim 14.